(19) Europäisches Patentamt / European Patent Office / Office européen des brevets

(11) **EP 3 394 725 B1**

(12) **EUROPEAN PATENT SPECIFICATION**

(45) Date of publication and mention
of the grant of the patent:
**01.12.2021 Bulletin 2021/48**

(21) Application number: **16879675.3**

(22) Date of filing: **18.11.2016**

(51) Int Cl.:
*G06F 9/30* (2018.01)     *G06F 15/80* (2006.01)

(86) International application number:
**PCT/US2016/062867**

(87) International publication number:
**WO 2017/112185 (29.06.2017 Gazette 2017/26)**

(54) **ADJOINING DATA ELEMENT PAIRWISE SWAP PROCESSORS, METHODS, SYSTEMS, AND INSTRUCTIONS**

PROZESSOREN MIT TAUSCH VON PAARWEISEN BENACHBARTEN DATENELEMENTEN, VERFAHREN, SYSTEME UND ANWEISUNGEN

PROCESSEURS DE PERMUTATION PAR PAIRES D'ÉLÉMENTS DE DONNÉES ADJACENTS, PROCÉDÉS, SYSTÈMES ET INSTRUCTIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2015 US 201514978736**

(43) Date of publication of application:
**31.10.2018 Bulletin 2018/44**

(73) Proprietor: **Intel Corporation
Santa Clara, CA 95054 (US)**

(72) Inventor: **JHA, Ashish
Portland
Oregon 97229 (US)**

(74) Representative: **Samson & Partner Patentanwälte mbB
Widenmayerstraße 6
80538 München (DE)**

(56) References cited:
| | |
|---|---|
| US-A1- 2002 027 552 | US-A1- 2003 167 460 |
| US-A1- 2004 143 728 | US-A1- 2007 156 685 |
| US-A1- 2012 278 591 | US-A1- 2013 185 544 |
| US-B1- 6 859 872 | US-B2- 7 353 331 |

**Description**

BACKGROUND

Technical Field

Embodiments described herein generally relate to processors. In particular, embodiments described herein generally relate to processors to operate on packed data in response to instructions.

Background Information

Many processors have Single Instruction, Multiple Data (SIMD) architectures. In SIMD architectures, multiple data elements may be packed within one register or memory location as packed data or vector data. In packed or vector data, the bits of the register or memory location may be logically divided into a sequence of data elements. For example, a 128-bit wide packed data register may have two 64-bit data elements, four 32-bit data elements, eight 16-bit data elements, or sixteen 8-bit data elements. Each of the data elements may represent a separate piece of data (e.g., a pixel color component, a floating point number, etc.) that may be operated upon separately and/or independently of the others.

In such SIMD architectures, a packed data instruction, vector instruction, or SIMD instruction may be used to operate on multiple data elements of such a packed data or vector operand, or multiple pairs of data elements of two such packed data or vector operands, simultaneously and/or in parallel. The processor may have parallel execution hardware responsive to the instruction to operate on the data simultaneously and/or in parallel.

US 2002/0027552 A1 pertains to an EXCHANGE instruction which swaps adjacent subwords in each pair of consecutive subwords in a source register, and US 2004/0143728 A1 pertains to an Endian reverse instruction. US 2003/0167460 A1 pertains to a Vector Swap instruction.

BRIEF DESCRIPTION OF THE DRAWINGS

The invention may best be understood by referring to the following description and accompanying drawings that are used to illustrate embodiments. In the drawings:

Figure 1 is a block diagram of an embodiment of a processor that is operative to perform an embodiment of an adjoining data element pairwise swap instruction.

Figure 2 is a block flow diagram of an embodiment of a method of performing an embodiment of an adjoining data element pairwise swap instruction.

Figure 3 is a block diagram illustrating an example embodiment of an adjoining data element pairwise swap operation.

Figure 4 is a block diagram illustrating an example embodiment of a masked adjoining data element pairwise swap operation.

Figure 5 is a block diagram illustrating an embodiment of the invention, in accordance with the claims, of a masked adjoining data element pairwise swap operation.

Figure 6 is a block diagram illustrating a more specific example embodiment of a masked adjoining data element pairwise swap operation used to swap real and imaginary components of complex numbers.

Figure 7 is a block diagram of an example embodiment of an adjoining data element pairwise swap instruction.

Figure 8 is a block diagram of an example embodiment of a suitable set of packed data registers.

Figure 9 is a block diagram of an example embodiment of a suitable set of packed data operation mask registers.

Figures 10A-10C are block diagrams illustrating a generic vector friendly instruction format and instruction templates thereof, according to embodiments of the invention.

Figure 11 is a block diagram of an embodiment of a register architecture.

Figure 12A is a block diagram illustrating an embodiment of an in-order pipeline and an embodiment of a register renaming out-of-order issue/execution pipeline.

Figure 12B is a block diagram of an embodiment of processor core including a front end unit coupled to an execution engine unit and both coupled to a memory unit.

Figure 13A is a block diagram of an embodiment of a single processor core, along with its connection to the on-die interconnect network, and with its local subset of the Level 2 (L2) cache.

Figure 13B is a block diagram of an embodiment of an expanded view of part of the processor core of Figure 13A.

Figure 14 is a block diagram of an embodiment of a processor that may have more than one core, may have an integrated memory controller, and may have integrated graphics.

Figure 15 is a block diagram of a first embodiment of a computer architecture.

**Figure 16** is a block diagram of a second embodiment of a computer architecture.

**Figure 17** is a block diagram of a third embodiment of a computer architecture.

**Figure 18** is a block diagram of a fourth embodiment of a computer architecture.

**Figure 19** is a block diagram of use of a software instruction converter to convert binary instructions in a source instruction set to binary instructions in a target instruction set, according to embodiments of the invention.

DETAILED DESCRIPTION OF EMBODIMENTS

Disclosed herein are adjoining data element pairwise swap instructions, processors to execute the instructions, methods performed by the processors when processing or executing the instructions, systems incorporating one or more processors to process or execute the instructions, and programs or machine-readable storage mediums having the instructions. In the following description, numerous specific details are set forth (e.g., specific instruction operations, data formats, types of data, processor configurations, microarchitectural details, sequences of operations, etc.). However, embodiments may be practiced without these specific details. In other instances, well-known circuits, structures and techniques have not been shown in detail to avoid obscuring the understanding of the description.

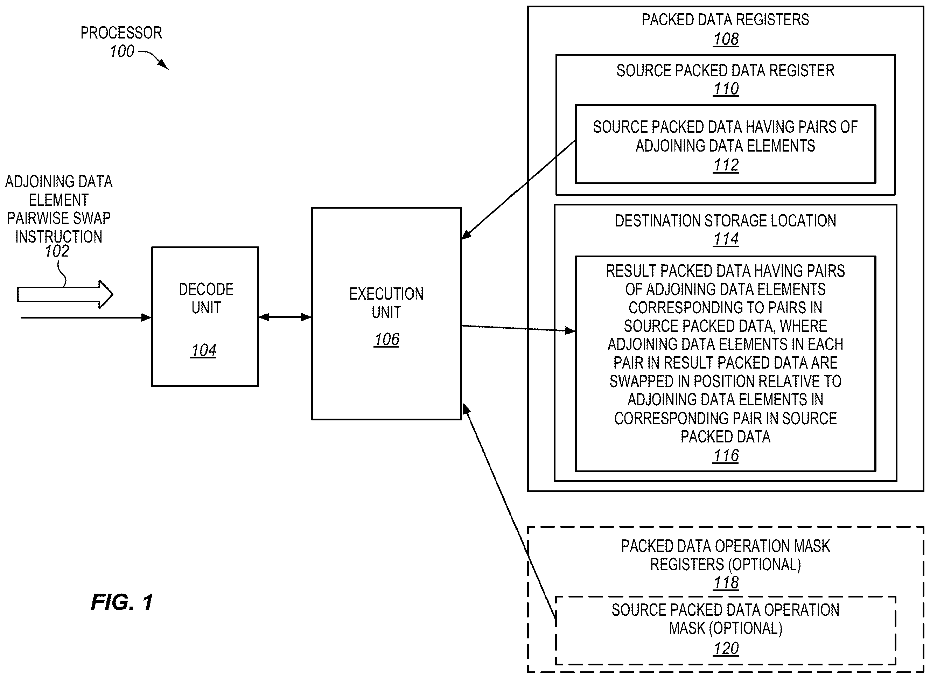

**Figure 1** is a block diagram of an embodiment of a processor 100 that is operative to perform an embodiment of an adjoining data element pairwise swap instruction 102. In some embodiments, the processor may represent an integrated circuit and/or may include integrated circuitry or logic disposed on a semiconductor die. In some embodiments, the processor may be a general-purpose processor (e.g., a general-purpose microprocessor or central processing unit (CPU) of the type used in desktop, laptop, or other computers). Alternatively, the processor may be a special-purpose processor. Examples of suitable special-purpose processors include, but are not limited to, network processors, communications processors, cryptographic processors, graphics processors, co-processors, embedded processors, digital signal processors (DSPs), and controllers (e.g., microcontrollers). The processor may have any of various complex instruction set computing (CISC) architectures, reduced instruction set computing (RISC) architectures, very long instruction word (VLIW) architectures, hybrid architectures, other types of architectures, or have a combination of different architectures (e.g., different cores may have different architectures).

During operation, the processor 100 may receive the adjoining data element pairwise swap instruction 102. For example, the instruction may be received from memory on an interconnect. The instruction may represent a macroinstruction, assembly language instruction, machine code instruction, or other instruction or control signal of an instruction set of the processor. In some embodiments, the adjoining data element pairwise swap instruction may explicitly specify (e.g., through one or more fields or a set of bits), or otherwise indicate (e.g., implicitly indicate), a source storage location (e.g., source packed data register 110) that is to store a source packed data 112, and may specify or otherwise indicate a destination storage location 114 where a result packed data 116 is to be stored in response to the instruction. In some embodiments, the instruction may specify or indicate only a single source packed data (e.g., indicate only the single source packed data register 110), instead of having two or more source packed data.

In the illustrated example, a first packed data register 110 is used for the source packed data operand 112 and a second packed data register 114 is used for the result packed data operand 116, although this is not required. In other embodiments, memory locations or other storage locations may optionally instead be used for one or more of these operands. The instruction may have source and/or destination operand specification fields to specify packed data registers (e.g., the registers 110, 114), or memory locations, or other storage locations for such operands. Alternatively, one or more of these storage locations may optionally be implicit to the instruction (e.g., implicit to an opcode of the instruction) instead of being explicitly specified. Moreover, in some embodiments, a packed data register or other storage location used for the source packed data may optionally be implicitly reused as a destination storage location for the result packed data and specified only once. In one aspect, a source/destination packed data register may be implicitly or impliedly understood to be used for both the source operand and the result operand.

Referring again to **Figure 1**, the processor includes a decode unit or decoder 104. The decode unit may receive and decode the adjoining data element pairwise swap instruction. The decode unit may output one or more relatively lower-level instructions or control signals (e.g., one or more microinstructions, micro-operations, micro-code entry points, decoded instructions or control signals, etc.), which reflect, represent, and/or are derived from the relatively higher-level adjoining data element pairwise swap instruction. In some embodiments, the decode unit may include one or more input structures (e.g., port(s), interconnect(s), an interface) to receive the adjoining data element pairwise swap instruction, an instruction recognition and decode logic coupled therewith to recognize and decode the adjoining data element pairwise swap instruction, and one or more output structures (e.g., port(s), interconnect(s), an interface) coupled therewith to output the lower-level instruction(s) or control signal(s). The decode unit may be implemented using various different mechanisms including, but not limited to, microcode read only memories (ROMs), look-up tables, hardware implementations, programmable logic arrays (PLAs), and other mechanisms suitable to implement decode units. In some embodiments, the decode unit may be included on a die of the processor.

In some embodiments, instead of the adjoining data element pairwise swap instruction being provided directly to the decode unit, an instruction emulator, translator, morpher, interpreter, or other instruction conversion module may optionally be used. Various types of instruction conversion modules may be implemented in software, hardware, firmware, or a combination thereof. In some embodiments, the instruction conversion module may be located outside the processor, such as, for example, on a separate die and/or in a memory (e.g., as a static, dynamic, or runtime emulation module). By way of example, the instruction conversion module may receive the adjoining data element pairwise swap instruction, which may be of a first instruction set, and may emulate, translate, morph, interpret, or otherwise convert the adjoining data element pairwise swap instruction into one or more corresponding intermediate instructions or control signals, which may be of a second different instruction set. The one or more intermediate instructions or control signals of the second instruction set may be provided to a decode unit (e.g., decode unit 104), which may decode them into one or more lower-level instructions or control signals executable by native hardware of the processor (e.g., one or more execution units).

Referring again to **Figure 1**, the processor 100 also includes a set of packed data registers 108. Each of the packed data registers may represent an on-die storage location that is operative to store packed data, vector data, or SIMD data. The packed data registers may represent architecturally-visible or architectural registers that are visible to software and/or a programmer and/or are the registers indicated by instructions of the instruction set of the processor to identify operands. These architectural registers are contrasted to other non-architectural registers in a given microarchitecture (e.g., temporary registers, reorder buffers, retirement registers, etc.). The packed data registers may be implemented in different ways in different microarchitectures and are not limited to any particular type of design. Examples of suitable types of registers include, but are not limited to, dedicated physical registers, dynamically allocated physical registers using register renaming, and combinations thereof.

Referring again to **Figure 1**, the execution unit 106 is coupled with the decode unit 104 and the packed data registers 108. The execution unit may be coupled with these components through other intervening components (not shown). In some embodiments, the execution unit may be on-die with the decode unit. The execution unit may receive the one or more decoded or otherwise converted instructions or control signals that represent and/or are derived from the adjoining data element pairwise swap instruction. The execution unit may also receive the source packed data 112. In some embodiments, the source packed data 112 may include at least two pairs (or in some cases at least four pairs, or at least eight pairs, or more pairs) of adjoining data elements. By adjoining data elements it is meant that the data elements of each pair may be contiguous and/or conterminous and/or that there may be no extra intervening data elements or bits between the data elements of each pair. For example, the most significant bit of the less significant data element in each pair may be one bit less than the least significant bit of the more significant data element in each pair. In some embodiments, the data elements may optionally be 8-bit byte data elements. In other embodiments, the data elements may optionally be multi-byte data elements, which each include two or more 8-bit bytes, although this is not required. For example, the data elements may optionally be 16-bit data elements, 32-bit data elements, or 64-bit data elements. The data elements may be integer, fixed point, or floating point. In some embodiments, the data elements may optionally be floating point data elements, such as, for example, 32-bit single precision floating point data elements or 64-bit double precision floating point data elements, although the scope of the invention is not so limited.

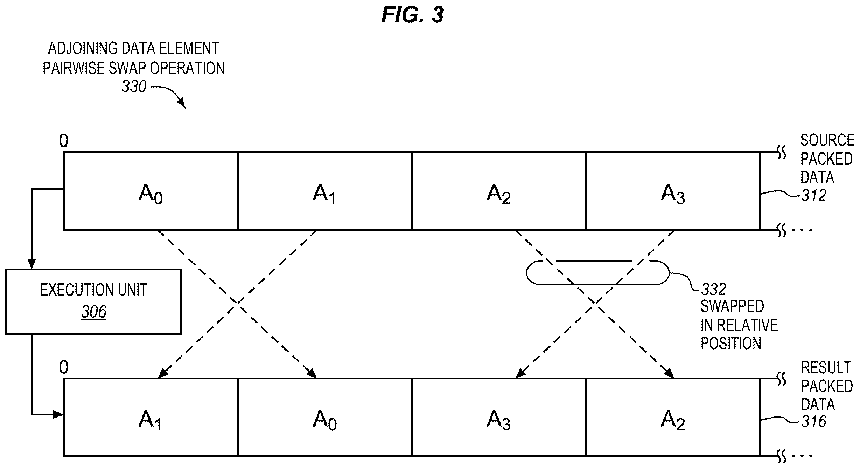

The execution unit may be operative in response to and/or as a result of the adjoining data element pairwise swap instruction (e.g., in response to one or more instructions or control signals decoded from the instruction) to store the result packed data 116 in the destination storage location (e.g., the destination packed data register 114) indicated by the instruction. In some embodiments, the result packed data 116 may include at least two pairs of adjoining data elements (e.g., a same number of pairs as in the source packed data 112). Each pair of adjoining data elements of the result packed data may correspond to a different pair of adjoining data elements of the source packed data. For example, each pair of adjoining data elements of the result packed data may correspond to a pair of adjoining data elements of the source packed data in a same relative bit position and/or or otherwise in a same relative position within the packed data. In some embodiments, the adjoining data elements in each pair of the result packed data may be swapped in data element position relative to the adjoining data elements in each corresponding pair of the source packed data. For example, each pair in the source packed data may include a less significant data element and a more significant data element, and the less significant data element of the pair in the source packed data may be stored into the most significant data element position of the corresponding pair in the result packed data, and the more significant data element of the pair in the source packed data may be stored into the less significant data element position of the corresponding pair in the result packed data. In some embodiments, the result may be any of those shown and described for **Figures 3-6,** although the scope of the invention is not so limited.

In some embodiments, the aspect of swapping the positions of the adjoining data elements in the pairs of the result packed data relative to the adjoining data elements in the corresponding pairs of the source packed data may be implicit to and/or fixed for the adjoining data element pairwise swap instruction (e.g., implicit to and/or fixed for an opcode of the instruction), instead of being flexible and/or explicitly specified (e.g., through additional flexible non-opcode control bits of the instruction). An alternate possible approach would be to use a flexible shuffle or permute instruction along with non-opcode shuffle or permute control bits representing non-opcode swap control bits. The shuffle or permute instruction may be used to shuffle or permute data elements from one or more source packed data, to different data element positions in a result packed data, according to corresponding the shuffle or permute control bits for each data element that is shuffled or permuted. These sets of shuffle or permute control bits may be provided in an immediate of the instruction, or in another source operand generally stored in a register, for example.

However, there are potential drawbacks with such an alternate approach of using such flexible shuffle or permute instructions, at least for certain applications. For one thing, it generally takes extra time and/or effort to generate the sets of shuffle or permute control bits. For example, either a programmer may need to generate these explicitly, or a compiler may need to generate them through additional workload on the compiler. In addition, storing the shuffle or permute control bits in a register may tie up the register and prevent it from being used for another purpose. Further, when the instruction has an additional field to specify a register to store the shuffle or permute control bits, or when the shuffle or permute control bits are provided by an immediate of the instruction, the length of the instruction may be increased. This may tend to reduce the number of instructions that can be fetched in an instruction bundle and/or increase the complexity of decoding the instruction and/or the time needed to decode the instruction, which may tend to reduce front end throughput. Also, this may tend to increase code size. In addition, in the case of an immediate, generally only a certain number of control bits are able to fit within the immediate, which may limit the number of data elements that can be shuffled or permuted.

However, such drawbacks may be generally avoided, in some embodiments, when the adjoining data element pairwise swap operation or aspect is implicit to and/or fixed for the adjoining data element pairwise swap instruction (e.g., implicit to and/or fixed for an opcode of the instruction), instead of being flexible and/or explicitly specified (e.g., through additional flexible non-opcode swap control bits of the instruction). In such embodiments, there is no need for the instruction to have or use such flexible non-opcode swap control bits (e.g., sets of shuffle or permute control bits). Rather, the processor may understand or recognize, based predominantly or potentially only on the opcode, but not based on any such non-opcode additional flexible swap control bits, that an adjoining data element pairwise swap operation is to be performed. This may help to avoid needing to generate such flexible non-opcode swap control bits, which may help to simplify programming or compiling. Also, there is no need to consume a register to store the flexible non-opcode swap control bits in a register, which may free it for other purposes. Further, there is no need for the instruction to have an additional field to specify such a register to store the flexible non-opcode swap control bits, or to have an immediate to provide the flexible non-opcode swap control bits, which may help to decrease the length of the instruction. This in turn may tend to decrease the code size. Also, this may tend to help increase front end throughput, by increasing the number of instructions that can be fetched in an instruction bundle and/or decrease the complexity of decoding the instruction and/or the time needed to decode the instruction.

The execution unit and/or the processor may include specific or particular logic (e.g., transistors, integrated circuitry, or other hardware potentially combined with firmware (e.g., instructions stored in non-volatile memory) and/or software) that is operative to perform the adjoining data element pairwise swap instruction and/or store the result packed data in response to and/or as a result of the adjoining data element pairwise swap instruction (e.g., in response to one or more instructions or control signals decoded from the adjoining data element pairwise swap instruction). By way of example, the execution unit may include an arithmetic logic unit, a logic unit, or a digital circuit to perform logical or data movement operations, or the like. In some embodiments, the execution unit may include one or more input structures (e.g., port(s), interconnect(s), an interface) to receive the source operand, logic coupled therewith to receive and swap the data element positions, and one or more output structures (e.g., port(s), interconnect(s), an interface) coupled therewith to output swapped data elements to the result operand.

In some embodiments, the execution unit to perform the adjoining data element pairwise swap instruction may optionally include relatively less flexible and/or relatively less complex and/or relatively faster logic as compared to that which may be used to perform a flexible shuffle or permute instruction. Generally, the amount of logic needed to perform such flexible shuffle or permute instructions tends to be fairly substantial. This is due in part to logic needed to manipulate, interpret, and use, the multiple sets of shuffle or permute control bits to select the source data elements to be stored to the corresponding result data elements. Such logic takes extra space on-die and also tends to consume additional power. Moreover, the extra operations associated with manipulating, interpreting, and using, the multiple sets of shuffle or permute control bits to flexibly select the source data elements also generally tend to take additional time in terms of processor clock cycles to be performed. However, since the operation performed for the adjoining data element pairwise swap instruction may be substantially fixed (e.g., swap relative positions of adjoining data elements), or at least much less flexible than that for the shuffle or permute instruction, the is a possibility to use relatively less flexible and/or relatively less in amount and/or relatively less complex and/or relatively faster logic as compared to that which may be used to perform a flexible shuffle or permute instruction. For example, relatively simpler logic customized specifically to performing a data element relative position swap operation, without needing to accommodate flexible selection from among more than two data elements using a set of shuffle or permute control bits, may be used. By way of example, fixed hardwired data element routing or swapping circuitry or paths may potentially be used, instead of multiplexors controlled by the shuffle/permute control bits, or other such flexible and generally slower selection circuitry. Per element swap control bits and associated per element swap control bit controlled selection logic may optionally be omitted. Generally, the adjoining data element pairwise swap instruction may be performed in at least one clock cycle less, or perhaps two or more clock cycles less, than the number of clock cycles needed to perform a flexible shuffle or permute instruction.

However, the adjoining data element pairwise swap instruction does perform a less flexible and more specific operation than the aforementioned shuffle and permute instructions. In some embodiments, an instruction set (e.g., including the instructions that a decode unit is able to decode) may include both one or more adjoining data element pairwise swap instructions as well as one or more flexible shuffle or permute instructions. This may allow a programmer or compiler to use an adjoining data element pairwise swap instruction to improve performance (e.g., by decoding a shorter instruction length and/or using faster execution logic) and/or reduce power when an adjoining data element pairwise swap operation is desired to be performed, or use a generally slower (e.g., due to decoding a longer instruction length and using slower execution logic) and generally more power hungry flexible shuffle or permute instructions when a more flexible data manipulation operation is desired to be performed.

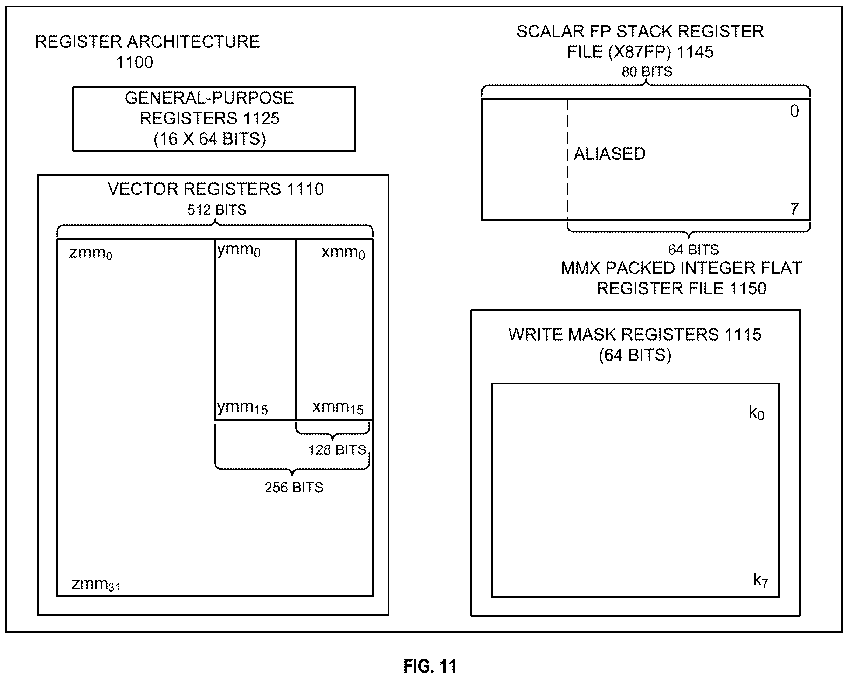

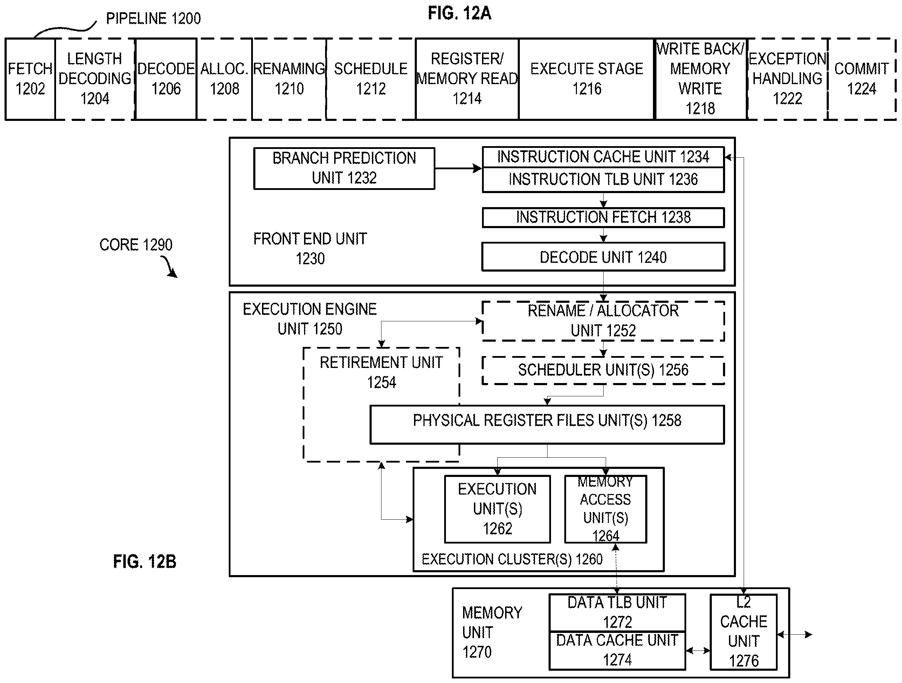

To avoid obscuring the description, a relatively simple processor 100 has been shown and described. However, the processor may optionally include other processor components. For example, various different embodiments may include various different combinations and configurations of the components shown and described for any of **Figures 11-14.** By way of example, considering Figure 12B, the instruction fetch unit 1238 may fetch the instruction, the decode unit 1240 may decode the instruction, the scheduler unit 1256 may schedule the associated operations, the retirement unit 1254 may retire the instruction, etc. All of the components of the processor may be coupled together to allow them to operate as intended.

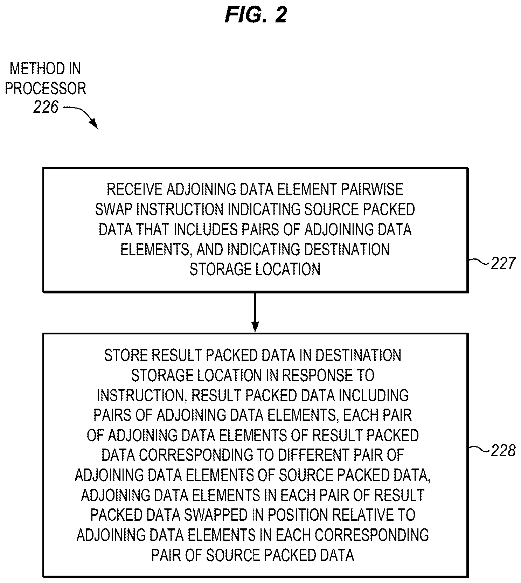

**Figure 2** is a block flow diagram of an embodiment of a method 226 of performing an embodiment of an adjoining data element pairwise swap instruction. In various embodiments, the method may be performed by a processor, instruction processing apparatus, integrated circuit, or digital logic device. In some embodiments, the method of **Figure 2** may be performed by and/or within the processor of **Figure 1.** The components, features, and specific optional details described herein for the processor of **Figure 1** and/or the instruction 102, also optionally apply to the method of **Figure 2** which may optionally be performed by the processor and/or be performed with the instruction 102. Alternatively, the method of **Figure 2** may be performed by and/or within a similar or different processor or apparatus. Moreover, the processor of **Figure 1** may perform methods the same as, similar to, or different than those of **Figure 2.**

The method includes receiving the adjoining data element pairwise swap instruction, at block 227. In various aspects, the instruction may be received at a processor or a portion thereof (e.g., an instruction fetch unit, a decode unit, a bus interface unit, etc.). In various aspects, the instruction may be received from an off-processor and/or off-die source (e.g., from memory, interconnect, etc.), or from an on-processor and/or on-die source (e.g., from an instruction cache, instruction queue, etc.). The adjoining data element pairwise swap instruction may specify or otherwise indicate a source packed data and may specify or otherwise indicate a destination storage location where a result packed data is to be stored. In some embodiments, the source packed data may include at least two pairs of adjoining (e.g., contiguous or conterminous) data elements. In some embodiments, the instruction may have only a single source packed data, not two or more source packed data, or an immediate. In some embodiments, the data elements of the source packed data may optionally be multi-byte data elements, which each include two or more 8-bit bytes, although this is not required. For example, the data elements may optionally be 16-bit data elements, 32-bit data elements, or 64-bit data elements. In some embodiments, the data elements may optionally be floating point data elements, such as, for example, 32-bit single precision floating point data elements or 64-bit double precision floating point data elements, although the scope of the invention is not so limited

A result packed data may be stored in the indicated destination storage location in response to and/or as a result of the adjoining data element pairwise swap instruction, at block 228. In some embodiments, the result packed data may include at least two pairs of adjoining data elements. Each pair of adjoining data elements of the result packed data may correspond to a different pair of adjoining data elements of the source packed data (e.g., in same bit positions and/or same relative positions within the packed data). In some embodiments, the adjoining data elements in each pair of adjoining data elements of the result packed data may be swapped in position relative to the adjoining data elements in each corresponding pair of adjoining data elements of the source packed data. For example, each pair in the source packed data may include a less significant data element and a more significant data element, and the less significant data element of the pair in the source packed data may be stored into the most significant data element position of the corresponding pair in the result packed data, and the more significant data element of the pair in the source packed data may be stored into the less significant data element position of the corresponding pair in the result packed data. In some embodiments, it may be implicit to and/or fixed for an opcode of the adjoining data element pairwise swap instruction to perform such an adjoining data element pairwise swap operation. In some embodiments, the instruction may not specify or otherwise indicate any non-opcode swap control bits (e.g., as may be provided in an immediate or additional source packed data of a flexible permute or shuffle instruction) and/or the result packed data may be generated without use of any such non-opcode swap control bits.

The illustrated method involves architectural operations (e.g., those visible from a software perspective). In other embodiments, the method may optionally include one or more microarchitectural operations. By way of example, the instruction may be fetched, decoded, scheduled out-of-order, a source packed data may be accessed, an execution unit may perform microarchitectural operations to implement the instruction, etc.

**Figure 3** is a block diagram illustrating an embodiment of an adjoining data element pairwise swap operation 330 that may be performed in response to an embodiment of an adjoining data element pairwise swap instruction. The instruction may specify or otherwise indicate a source packed data 312 that is to have at least two pairs of adjoining data elements. In the illustrated example embodiment, the source packed data includes at least a first least significant pair of adjoining data elements A0 and A1 and a second more significant pair of adjoining data elements A2 and A3, and optionally may include zero or more other pairs of adjoining data elements.

Commonly, the number of data elements in each source packed data operand may be equal to the size in bits of the source packed data operand divided by the size in bits of a single data element. In various embodiments, the widths of each of the source packed data operands may be 64-bits, 128-bits, 256-bits, 512-bits, or 1024-bits, although the scope of the invention is not so limited. In various embodiments, the size of each data element may be 8-bits, 16-bits, 32-bits, or 64-bits, although the scope of the invention is not so limited. Other packed data operand sizes and data elements widths are also suitable. In various embodiments, there may be at least two, at least four, at least eight, at least sixteen, at least thirty-two, or more than thirty-two data elements (e.g., at least sixty four), in each of the source packed data operands.

During the adjoining data element pairwise swap operation, the source packed data 312 may be provided to an execution unit 306. The execution unit may generate and store a result packed data 316 in response to the instruction and/or operation. In some embodiments, the result packed data may be stored in a destination packed data register or other destination storage location specified or otherwise indicated by the instruction. In some embodiments, the result packed data may include at least two pairs of adjoining data elements. In some embodiments, the result packed data may include a same number of pairs of adjoining data elements as in the source packed data. Each pair of adjoining data elements of the result packed data may correspond to a different pair of adjoining data elements of the source packed data (e.g., in a same relative bit position or otherwise in a same relative position within the packed data). For example, in the illustrated example embodiment, the result packed data includes at least a first least significant (leftmost as viewed) pair of adjoining data elements A1 and A0 (e.g., which may correspond to the least significant (leftmost as viewed) pair of adjoining data elements A0 and A1 of the source packed data), and a second more significant (rightmost as viewed) pair of adjoining data elements A3 and A2 (e.g., which may correspond to the more significant (rightmost as viewed) pair of adjoining data elements A2 and A3 of the source packed data), and optionally may include zero or more other pairs of adjoining data elements. As shown generally by arrows 332, in some embodiments, the adjoining data elements in each pair of adjoining data elements of the result packed data may have been swapped in position relative to the adjoining data elements in each corresponding pair of adjoining data elements of the source packed data.

For example, the least significant data element A0 of the least significant pair of adjoining data elements in the source packed data may be stored into the more significant data element position as data element A0 of the corresponding least significant pair of adjoining data elements in the result packed data. Continuing, the more significant data element A1 of the least significant pair of adjoining data elements in the source packed data may be stored into the least significant data element position as data element A1 of the corresponding least significant pair of adjoining data elements in the result packed data. Moreover, the less significant data element A2 of the next-to-least significant pair of adjoining data elements in the source packed data may be stored into the more significant data element position as data element A2 of the corresponding next-to-least significant pair of adjoining data elements in the result packed data. Continuing, the more significant data element A3 of the next-to-least significant pair of adjoining data elements in the source packed data may be stored into the less significant data element position as data element A3 of the corresponding next-to-least significant pair of adjoining data elements in the result packed data. Any other optional pairs of adjoining data elements may be swapped in position analogously.

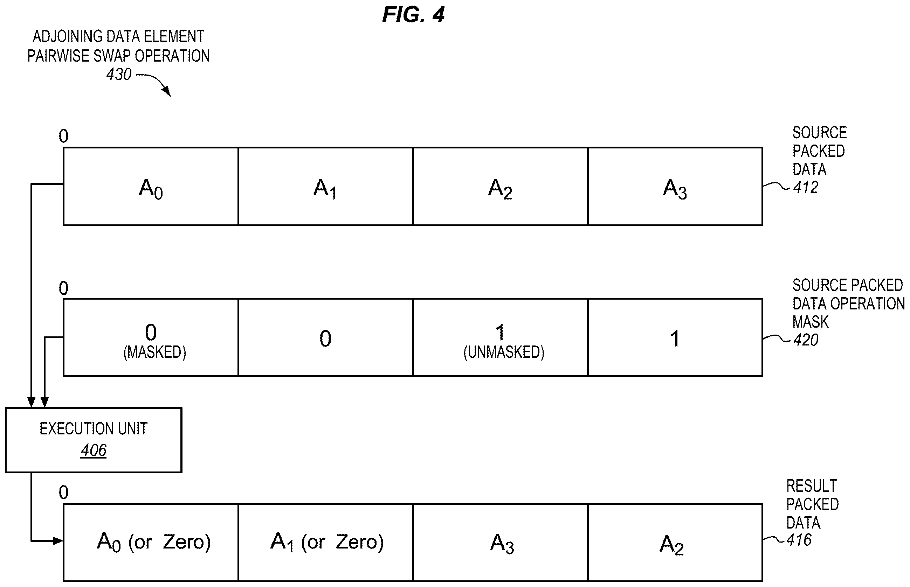

**Figure 4** is a block diagram illustrating an embodiment of a masked adjoining data element pairwise swap operation 430 that may be performed in response to an embodiment of a masked adjoining data element pairwise swap instruction. The masked operation of **Figure 4** has certain similarities to the unmasked operation of **Figure 3**. To avoid obscuring the description, the different and/or additional characteristics for the masked operation of **Figure 4** will primarily be described, without repeating all the optionally similar or common characteristics and details relative to the unmasked operation of **Figure 3**. However, it is to be appreciated that the previously described characteristics and details of the unmasked operation of **Figure 3** may also optionally apply to the masked operation of **Figure 4,** unless stated otherwise or otherwise clearly apparent (e.g., if they pertain to differences due to masking).

The masked instruction may specify or otherwise indicate a source packed data 412 that is to have at least two pairs of adjoining data elements. The source packed data 412 may be similar to, or the same as, the previously described source packed data 312, and may have the same variations and alternatives. In the illustrated example embodiment, the source packed data includes at least a first least significant pair of adjoining data elements A0 and A1 and a second more significant pair of adjoining data elements A2 and A3, and optionally may include zero or more other pairs of adjoining data elements. The size of the source packed data, size of the data elements, and number of data elements may be similar to, or the same as, the previously described source packed data 312, and may have the same variations and alternatives.

The masked instruction may optionally additionally specify (e.g., explicitly specify) or otherwise indicate (e.g., implicitly indicate) a source packed data operation mask 420. The source packed data operation mask may also be referred to herein simply as an operation mask, predicate mask, or mask. By way of example, the source packed data operation mask may be stored in a packed data operation mask register of a set of architectural packed data operation mask registers, a general-purpose register, a packed data register (e.g., a most significant bit, least significant bit, or other single bit of each data element position may be used as a mask element), or other register or storage location.

The mask may represent a predicate operand or conditional control operand that is used to predicate, conditionally control, or mask whether or not corresponding operations are performed and/or corresponding results are stored. In some embodiments, the masking or predication may be at per-data element granularity so that operations on different data elements may be predicated or conditionally controlled separately and/or independently of others. The mask may include multiple mask elements, predicate elements, or conditional control elements. In one aspect, the mask elements may be included in a one-to-one correspondence with corresponding source data elements and/or corresponding result data elements. The mask may have a different corresponding mask element for each data element in the source packed data and/or each result data element in the result packed data. It is often convenient, for the corresponding data elements and mask elements to be in corresponding relative positions within the operands, although this is not strictly required and other conventions for correspondence may optionally be used if desired. By way of example, each mask element in the mask may correspond to a different data element in the source packed data in a same relative position within the respective operands. For example, the least significant mask bit may correspond to the least significant data element, the least significant (leftmost as viewed) mask bit or element may correspond to the least significant (leftmost as viewed) data element, and so on. In the illustrated example, the corresponding mask elements and data elements are shown in vertical alignment. As shown, in some embodiments, each mask element may optionally be a single mask bit. Alternatively, two or more bits may optionally be used for each mask element (e.g., each mask element may have a same number of bits as each corresponding data element and one or more bits of the data element may provide a masked or unmasked value).

A value of each mask element may control whether or not a corresponding operation is to be performed and/or a corresponding result data element is to be stored. Each mask element may have a first value to allow the operation to be performed and allow the corresponding result data element to be stored in the result packed data, or may have a second different value to not allow the operation to be performed and/or not allow the corresponding result data element to be stored in the result packed data. According to one possible convention, as shown in the illustration, a mask bit cleared to binary zero (i.e., 0) may represent a masked or masked out operation in which a result of the operation is not to be stored in the result packed data, whereas a mask bit set to binary one (i.e., 1) may represent an unmasked operation in which a result of the operation is to be stored in the result packed data. The opposite convention is also possible. In the illustrated example, the two least significant (leftmost as viewed) mask elements are masked, whereas the two more significant (rightmost as viewed) mask elements are unmasked.

During the masked adjoining data element pairwise swap operation 430, the source packed data 412 and the source packed data operation mask 420 may each be provided to an execution unit 406. The execution unit may perform the masked adjoining data element pairwise swap operation to generate and store a result packed data 416 in response to the instruction and/or operation. The masked operation may be performed subject to the masking, predication, or conditional control of the source packed data operation mask. In some embodiments, the result packed data may be stored in a destination packed data register or other destination storage location specified or otherwise indicated by the instruction.

In some embodiments, the result packed data may include at least two pairs of adjoining data elements. In some embodiments, the result packed data may include a same number of pairs of adjoining data elements as in the source packed data. Each pair of adjoining data elements of the result packed data may correspond to a different pair of adjoining data elements of the source packed data (e.g., in a same relative bit position or otherwise in a same relative position within the packed data). For example, in the illustrated example embodiment, the result packed data includes at least a first least significant (leftmost as viewed) pair of adjoining data elements (e.g., which may correspond to the least significant (leftmost as viewed) pair of adjoining data elements A0 and A1 of the source packed data), and a second more significant (rightmost as viewed) pair of adjoining data elements (e.g., which may correspond to the more significant (rightmost as viewed) pair of adjoining data elements A2 and A3 of the source packed data), and optionally may include zero or more other pairs of adjoining data elements.

In some embodiments, the adjoining data elements in each pair of adjoining data elements of the result packed data 416, which correspond to unmasked mask elements of the mask 420, may have been swapped in position relative to the adjoining data elements in each corresponding pair of adjoining data elements of the source packed data 412. In the illustrated example, the next-to-least significant (rightmost as viewed) pair of adjoining data elements A2 and A3 in the source packed data 412 correspond to unmasked mask elements. For this example, the less significant data element A2 of the next-to-least significant (rightmost as viewed) pair of adjoining data elements in the source packed data 412 may be stored into the more significant data element position as data element A2 of the corresponding next-to-least significant (rightmost as viewed) pair of adjoining data elements in the result packed data 416. Continuing, the more significant data element A3 of the next-to-least significant (rightmost as viewed) pair of adjoining data elements in the source packed data 412 may be stored into the less significant data element position as data element A3 of the corresponding next-to-least significant (rightmost as viewed) pair of adjoining data elements in the result packed data 416. Additional unmasked pairs of adjoining data elements (if any, not shown) may be swapped in position analogously.

In contrast, in some embodiments, the adjoining data elements in each pair of adjoining data elements of the result packed data 416, which correspond to masked or masked out mask elements of the mask 420, may instead have values that do not depend on the adjoining data element pairwise swap operation being performed on the corresponding adjoining data elements in the source packed data. In some embodiments, result data elements that correspond to masked out mask elements may have fixed or predetermined values. For example, either the corresponding adjoining data element pairwise swap operation need not be performed, or if the corresponding adjoining data element pairwise swap operation is performed, then the corresponding result elements need not be stored in the result packed data. Rather, fixed or predetermined values may be stored in the corresponding result data elements. The particular fixed or predetermined values may depend on the type of masking used for the particular implementation. In some embodiments, zeroing masking may be used. In zeroing masking, the masked-out result data elements may be zeroed-out (e.g., be forced to have a value of zero). For example, a 16-bit result data element may have sixteen zeroed bit values. In other embodiments, merging masking may be used. In merging masking, the masked-out result data elements may have a value of the corresponding source data element (e.g., the corresponding source data element in the same relative position within the packed data may be merged or passed through to the corresponding masked-out result data element). In the illustrated example, the least significant (leftmost as viewed) pair of adjoining data elements A0 and A1 in the source packed data 412 correspond to masked or masked out mask elements. As shown in the illustrated example, the least significant (leftmost as viewed) pair of adjoining data elements in the result packed data 416 may have either zeroed out values (e.g., shown as 0), or the merged A0 and A1 values which have not been swapped in position relative to the A0 and A1 values in the source packed data.

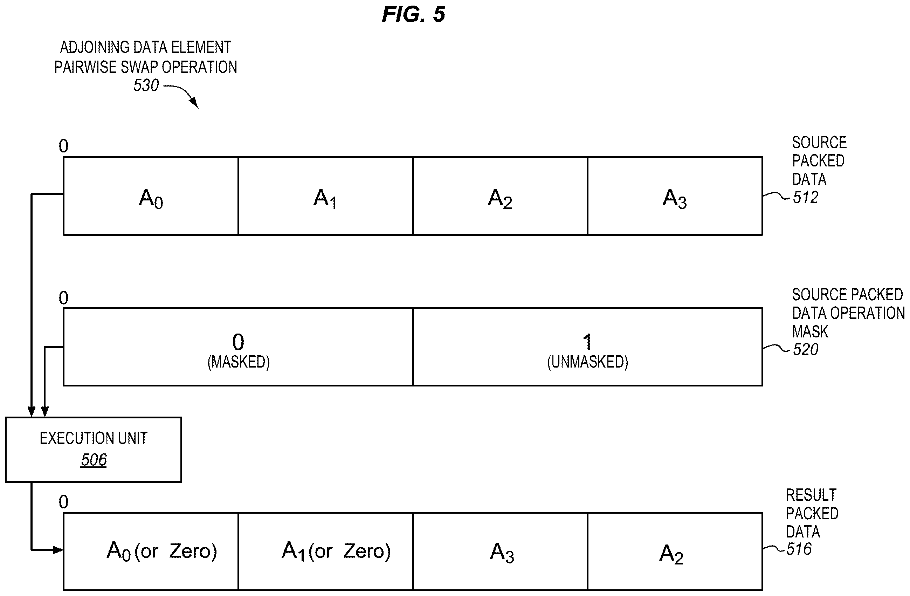

**Figure 5** is a block diagram illustrating an embodiment, in accordance with the claimed invention, of a masked adjoining data element pairwise swap operation 530 that may be performed in response to an embodiment of a second masked adjoining data element pairwise swap instruction. The operation of **Figure 5** has certain similarities to the operation of **Figure 4**. To avoid obscuring the description, the different and/or additional characteristics for the operation of **Figure 5** will primarily be described, without repeating all the optionally similar or common characteristics and details relative to the operation of **Figure 4**. However, it is to be appreciated that the previously described characteristics and details of the operation of **Figure 4** may also optionally apply to the operation of **Figure 5**, unless stated otherwise or otherwise clearly apparent.

The masked instruction may specify or otherwise indicate a source packed data 512. The source packed data 412, and its data elements, may be similar to, or the same as, the previously described source packed data 312 and/or 412, and may have the same variations and alternatives.

The masked instruction specifies (e.g., explicitly specify) or otherwise indicates (e.g., implicitly indicate) a source packed data operation mask 520. Aside from the differences mentioned below, the source packed data operation mask 520, and its mask elements, may be similar to, or the same as, the previously described source packed data operation mask 420, and may have the same variations and alternatives.

In the invention, each mask element of the source packed data operation mask is in a one-to-one correspondence with a corresponding pair of adjoining data elements and/or a corresponding pair of adjoining result data elements, instead of in a one-to-one correspondence with a single/individual source data element and/or single individual result data element. For example, the least significant (leftmost as viewed) mask element may correspond to the least significant (leftmost as viewed) adjoining pair of source data elements A0 and A1 and/or the least significant (leftmost as viewed) adjoining pair of result data elements. Likewise, the next-to-least significant (rightmost as viewed) mask element may correspond to the next-to-least significant (rightmost as viewed) adjoining pair of source data elements A0 and A1 and/or the next-to-least significant (rightmost as viewed) adjoining pair of result data elements A3 and A2. A value of each mask element may control whether or not a corresponding adjoining data element pairwise swap operation is to be performed and/or a corresponding position swapped pair of adjoining result data elements is to be stored.

During the masked adjoining data element pairwise swap operation 530, the source packed data 512 and the source packed data operation mask 520 are each be provided to an execution unit 506. The execution unit performs the masked adjoining data element pairwise swap operation to generate and store a result packed data 516 in response to the instruction and/or operation. The result packed data, and its result data elements, may be similar to, or the same as, the previously described source packed data 416, and may have the same variations and alternatives.

One use, but certainly not the only use, of the adjoining data element pairwise swap instructions and/or operations as disclosed herein is to process natively paired or tupled types of data. One example of such a natively paired or tupled type of data is complex numbers. Complex numbers are widely used in a number of applications, such as, for example, quantum chromodynamics, molecular dynamics, and various other high performance computing applications, to name a few examples. A complex number includes a real number or component and an imaginary number or component. These real or imaginary numbers or components collectively represent the complex number, and are often processed together during arithmetic operations on the complex number, such as, for example, addition, subtraction, multiplication, and the like. Consequently, the real and imaginary numbers or components are often stored and processed together, for example, in an array of adjoining two data element structures, tuples, or pairs. Vectors or arrays of these complex numbers are often multiplied, added, subtracted, or the like, as arrays of two data element structures.

In order to efficiently perform certain such arithmetic operations on the complex numbers, if is often beneficial to be able to efficiently swap the relative positions of the real and imaginary numbers or components. As one example, this may be the case in a complex number multiplication. The multiplication of a first complex number (a+bi) and a second complex number (c+di) may be represented as Equation 1:

$$(a+bi)(c+di) = (ac-bd) + (bc+ad)i \hspace{4cm} \text{Equation 1}$$

As shown, the multiplication of such complex numbers involves multiplying real components by real components (e.g., to generate product ac) and imaginary components by imaginary components (e.g., to generate product bd), as well as multiplying real components by imaginary components (e.g., to generate product ad and product bc). Accordingly, from an algorithmic perspective, if a packed data multiplication or SIMD multiplication is to be performed, at one point the real components of each complex number should be in the same SIMD positions or in so-called vertical SIMD alignment, whereas at other times the real components and the imaginary components should be in the same SIMD positions or in vertical SIMD alignment. In some embodiments, the adjoining data element pairwise swap instructions and/or operations as disclosed herein may be used to perform such swapping of the relative positions of the real and imaginary numbers or components of complex numbers, often with improved performance and/or lower power consumption as compared to if flexible shuffle or permute instructions were used. In addition, such instructions/operations may be used on other types of paired or tupled data. However, the scope of the invention is not limited to operating on natively paired or tupled types of data. Rather, the instructions and/or operations disclosed herein are general-purpose and may be used to operate on any desired types of data without any requirement for a relationship between the adjoining data elements.

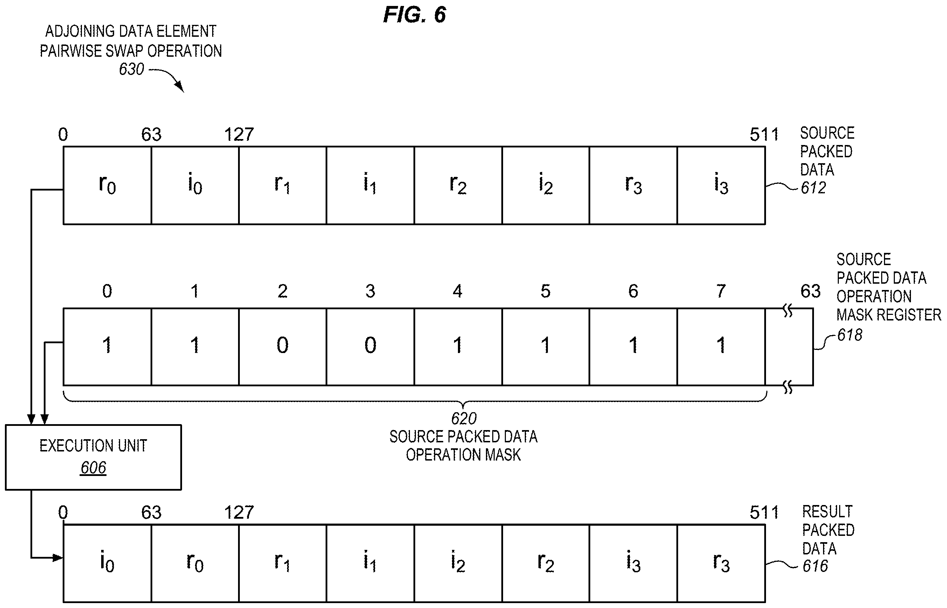

To further illustrate certain concepts, a more specific example embodiment of operating on complex numbers will be described. **Figure 6** is a block diagram illustrating a more specific example embodiment of a masked adjoining data element pairwise swap operation 630 that may be performed in response to an embodiment of a masked adjoining data element pairwise swap instruction. The operation of **Figure 6** has certain similarities to the operations of **Figure 3** and/or **Figure 4**. To avoid obscuring the description, the different and/or additional characteristics for the operation of **Figure 6** will primarily be described, without repeating all the optionally similar or common characteristics and details relative to the operations of **Figure 3** and/or **Figure 4**. However, it is to be appreciated that the previously described characteristics and details of the operations of **Figure 3** and/or **Figure 4** may also optionally apply to the operation of **Figure 6,** unless stated otherwise or otherwise clearly apparent.

The instruction may specify or otherwise indicate a source packed data 612. In this example, the source packed data is 512-bits wide, although wider or narrower widths may optionally be used instead. In this case, the source packed data has four complex numbers. In other embodiments, fewer or more may be included. Each complex number includes an adjoining pair of a real number or data element (r) and an imaginary number or data element (i). For example, a first complex number may have real and imaginary components r0 and i0, a second complex number may have real and imaginary components r1 and i1, and so on. Conventionally, complex numbers are often stored in memory with the real numbers being stored in relatively less significant bit positions, and the corresponding imaginary numbers being stored in adjoining relatively more significant bit positions, although this is not required. Accordingly, in the illustrated example, the real numbers of each complex number in the source packed data are stored in the less significant positions and the imaginary numbers being stored in the relatively more significant positions. In the illustrated example, each of the real and imaginary numbers is included in a 64-bit data element (e.g., a 64-bit double precision floating point data element), although in other embodiments other sized data elements (e.g., 32-bit single precision floating point or a 16-bit half precision floating point) may optionally be used.

The instruction may optionally additionally specify (e.g., explicitly specify) or otherwise indicate (e.g., implicitly indicate) a source packed data operation mask 620, although this is not required. An alternate analogous operation may be an unmasked operation performed without such a source packed data operation mask. The source packed data operation mask may be stored in a source packed data operation mask register 618. In this case, the source packed data operation mask is an 8-bit mask and the source packed data operation mask register is a 64-bit register, although wider or narrower masks and mask registers may optionally be used instead. The source packed data operation mask includes a different mask bit for each data element in the source packed data. In the illustrate example, the corresponding data elements and mask bits are in same relative positions within the operands and shown in vertical alignment in the illustration. In the illustrated example, only the mask bits in bits [3:2] of the mask are masked out whereas the mask bits in bits [1:0] and [7:4] are unmasked. This is just one example.

During the masked adjoining data element pairwise swap operation 630, the source packed data 612 and the source packed data operation mask 620 may each be provided to an execution unit 606. The execution unit may perform the masked adjoining data element pairwise swap operation to generate and store a result packed data 616 in response to the instruction and/or operation. In some embodiments, the result packed data may be stored in a destination packed data register or other destination storage location specified or otherwise indicated by the instruction.

As shown in this example, the adjoining real and imaginary numbers of each complex number of the result packed data 616, which correspond to unmasked mask bits of the mask 620, may have been swapped in position relative to the adjoining real and imaginary numbers of each complex number of the source packed data 612. In contrast, in the case of a masked operation, the adjoining real and imaginary numbers of each complex number of the result packed data 616, which correspond to masked or masked out mask elements of the mask 620, may instead have values that do not depend on the adjoining data element pairwise swap operation being performed on the corresponding adjoining real and imaginary numbers of each complex number of the source packed data 612. For example, the real and imaginary numbers r1 and i1 of the source packed data, which corresponding to the masked out mask bits in bit positions [3:2], may optionally be merged into the same non-swapped positions of the result packed data. Alternatively, these result data elements may optionally be zeroed out.

As previously mentioned, the mask 620 may be stored in the mask register 618. In some embodiments, the mask register may have more bits than are used as the active bits of the mask 620 actually used for predication. For example, a 64-bit mask register may be used to store an 8-bit mask, a 16-bit mask, or a 32-bit mask. As another example, a 32-bit mask register may be used to store an 8-bit mask or a 16-bit mask. In some embodiments, these extra non-active bits in the mask register may not be used for masking and, for example, may be ignored and/or may not affect the operation.

A few examples of suitable adjoining data element pairwise swap operations have been shown and described for **Figures 3-6,** although other examples are also contemplated. For example, in other embodiments, the operations may be performed on two or more source packed data stored in two or more source packed data registers to generate a two or more result packed data operands to be stored in two or more destination packed data registers. For example, the instruction may specify one source register and one destination register and it may be implicit to use the next sequential registers as another source register and another destination register. Other embodiments may vary the numbers and sizes of data elements in the operands.

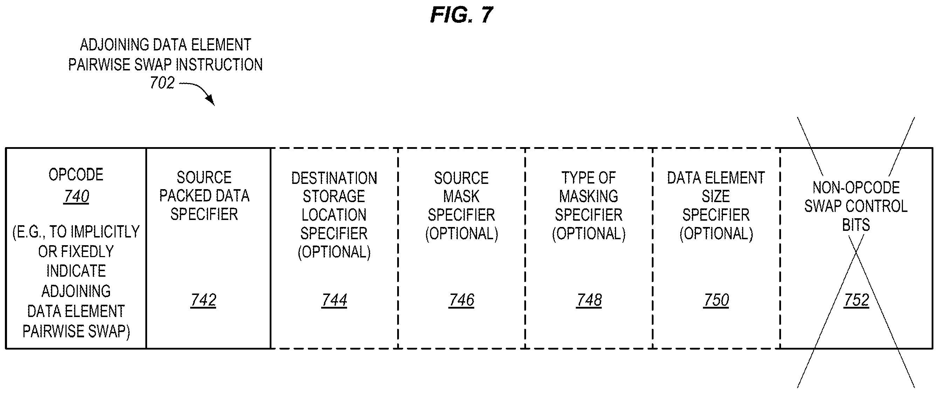

**Figure 7** is a block diagram of an example embodiment of an adjoining data element pairwise swap instruction 702. The instruction includes an operation code or opcode 740. The opcode may represent a plurality of bits, or one or more fields, that are operative to identify the instruction and/or the operation to be performed (e.g., an adjoining data element pairwise swap operation). In some embodiments, the opcode may implicitly indicate and/or it may be fixed for the opcode that an adjoining data element pairwise swap is to be performed.

The instruction also includes a source packed data specifier 742 (e.g., a field and/or one or more not necessarily contiguous bits) to specify a packed data register, memory location, or other storage location of a source packed data. In some embodiments, the instruction may only have a single source packed data specifier not two or more. The instruction also includes an optional destination storage location specifier 744 (e.g., a field and/or one or more not necessarily contiguous bits) to specify a destination packed data register, memory location, or other storage location where a result packed data is to be stored. Alternatively, one or more of these storage locations may optionally be implicit or inherent to the instruction (e.g., the opcode), rather than being specified in which case the associated specifier may optionally be omitted. For example, the instruction may have an implicit fixed register as a storage location for a source and/or destination operand. As another example, in some embodiments, instead of the destination specifier, a storage location used for the source packed data may optionally be implicitly reused for the destination packed data. For example, a source/destination register may initially have a source packed data and subsequently the result packed data may be written over the source packed data in the source/destination register.

In some embodiments, the instruction may also optionally have a source packed data operation mask specifier 746 (e.g., a field and/or one or more not necessarily contiguous bits) to specify a packed data mask register, general-purpose register, packed data register, or other storage location where a packed data operation mask is to be stored. Alternatively, instead of the explicit source packed data operation mask specifier a storage location of a source packed data operation mask may optionally be implicit. Further, masking is optional and not required, and when masking is not used the source packed data operation mask specifier may be omitted.

In some embodiments, the instruction may optionally include a type of masking specifier 748 to specify a type of masking operation, although this is not required. By way of example, the type of masking specifier may include one or more bits that may have a first value to specify that a first type of masking (e.g., merging-masking) is to be used, or a second value to specify that a second type of masking (e.g., zeroing-masking) is to be used. Alternatively, the type of masking operation may optionally be implicitly indicated (e.g., in an implicit control register) or implicitly by the opcode. As another option, only a single type of masking may optionally be used, at least for the opcode, such that there may be no need for the type of masking specifier.

In some embodiments, the instruction may optionally have a data element size specifier 750 (e.g., one or more not necessarily contiguous bits) to specify a data element size. As one illustrative example, a 2-bit field may have four different values to indicate four different sizes of data elements (e.g., 00 for 8-bits, 01 for 16-bits, 10 for 32-bits, and 11 for 64-bits). This is just one illustrative example. Alternatively, the size may optionally be fixed for the instruction (e.g., the opcode).

As shown at 752, there may be no need for the instruction to have additional non-opcode swap control bits. For example, there may be no immediate of the instruction to provide shuffle or permute control bits that may be used as swap control bits. As another example, there may be no additional bits or a field of the instruction to indicate a register or other storage location to provide such shuffle or permute control bits that may be used as swap control bits.

The illustration shows examples of the types of fields that may be included in an embodiment of an adjoining data element pairwise swap instruction. Alternate embodiments may include a subset of the illustrated fields and/or may add additional fields. The illustrated arrangement of the fields is not required, rather the fields may be rearranged variously. Moreover, each of the fields may either consist of a contiguous set of bits, or may include non-contiguous or separated bits that logically represent the field. In some embodiments, the instruction may have an instruction format as described further below, although this is not required.

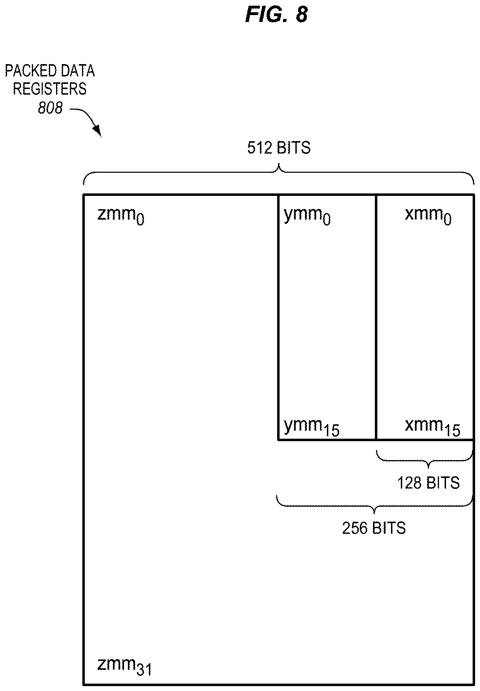

**Figure 8** is a block diagram of an example embodiment of a suitable set of packed data registers 808. The packed data registers include thirty-two 512-bit packed data registers labeled ZMM0 through ZMM31. In the illustrated embodiment, the lower order 256-bits of the lower sixteen registers, namely ZMM0-ZMM15, are aliased or overlaid on respective 256-bit packed data registers labeled YMM0-YMM15, although this is not required. Likewise, in the illustrated embodiment, the lower order 128-bits of the registers YMM0-YMM15 are aliased or overlaid on respective 128-bit packed data registers labeled XMM0-XMM15, although this also is not required. The 512-bit registers ZMM0 through ZMM31 are operative to hold 512-bit packed data, 256-bit packed data, or 128-bit packed data. The 256-bit registers YMM0-YMM15 are operative to hold 256-bit packed data or 128-bit packed data. The 128-bit registers XMM0-XMM15 are operative to hold 128-bit packed data. In some embodiments, each of the registers may be used to store either packed floating-point data or packed integer data. Different data element sizes are supported including at least 8-bit byte data, 16-bit word data, 32-bit doubleword, 32-bit single-precision floating point data, 64-bit quadword, and 64-bit double-precision floating point data. In alternate embodiments, different numbers of registers and/or different sizes of registers may be used. In still other embodiments, registers may or may not use aliasing of larger registers on smaller registers and/or may or may not be used to store floating point data.

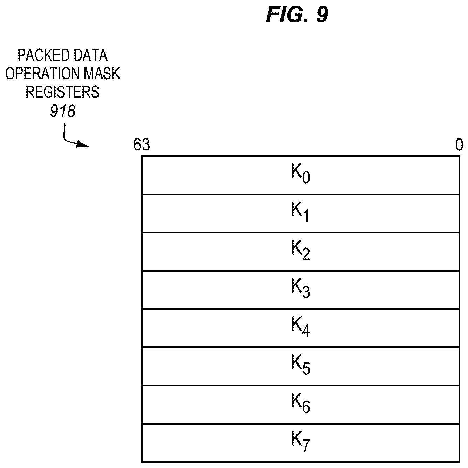

**Figure 9** is a block diagram of an example embodiment of a suitable set of packed data operation mask registers 918. In the illustrated embodiment, the set includes eight registers labeled k0 through k7. Alternate embodiments may include either fewer than eight registers (e.g., two, four, six, etc.), or more than eight registers (e.g., sixteen, thirty-two, etc.). Each of these registers may be used to store a packed data operation mask. In the illustrated embodiment, each of the registers is 64-bits. In alternate embodiments, the widths of the registers may be either wider than 64-bits (e.g., 80-bits, 128-bits, etc.), or narrower than 64-bits (e.g., 8-bits, 16-bits, 32-bits, etc.). The registers may be implemented in different ways and are not limited to any particular type of circuit or design. Examples of suitable registers include, but are not limited to, dedicated physical registers, dynamically allocated physical registers using register renaming, and combinations thereof.

In some embodiments, the packed data operation mask registers 918 may be a separate, dedicated set of architectural registers. In some embodiments, the instructions may encode or specify the packed data operation mask registers in different bits or one or more different fields of an instruction format than those used to encode or specify other types of registers (e.g., packed data registers). By way of example, an instruction may use three bits (e.g., a 3-bit field) to encode or specify any one of the eight packed data operation mask registers k0 through k7. In alternate embodiments, either fewer or more bits may be used, respectively, when there are fewer or more packed data operation mask registers. In one particular implementation, only packed data operation mask registers k1 through k7 (but not k0) may be addressed as a predicate operand to predicate a masked packed data operation. The register k0 may be used as a regular source or destination, but may not be encoded as a predicate operand (e.g., if k0 is specified it has a "no mask" encoding), although this is not required.

In the above-described embodiments, the instruction has been shown to have only a single source packed data (e.g., a single source packed data register) and a single result packed data (e.g., a single destination register), although in other embodiments the instruction may optionally have two or more source packed data (e.g., two or more source packed data registers) each including pairs of adjoining data elements which are to have their relative positions swapped and stored into two or more result packed data (e.g., two or more destination registers).

An instruction set includes one or more instruction formats. A given instruction format defines various fields (number of bits, location of bits) to specify, among other things, the operation to be performed (opcode) and the operand(s) on which that operation is to be performed. Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source 1/destination and source2); and an occurrence of this ADD instruction in an instruction stream will have specific contents in the operand fields that select specific operands. A set of SIMD extensions referred to the Advanced Vector Extensions (AVX) (AVX1 and AVX2) and using the Vector Extensions (VEX) coding scheme, has been , has been released and/or published (e.g., see Intel® 64 and IA-32 Architectures Software Developers Manual, October 2011; and see Intel® Advanced Vector Extensions Programming Reference, June 2011).

## Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

## VEX Instruction Format

VEX encoding allows instructions to have more than two operands, and allows SIMD vector registers to be longer than 128 bits. The use of a VEX prefix provides for three-operand (or more) syntax. For example, previous two-operand instructions performed operations such as A = A + B, which overwrites a source operand. The use of a VEX prefix enables operands to perform nondestructive operations such as A = B + C.

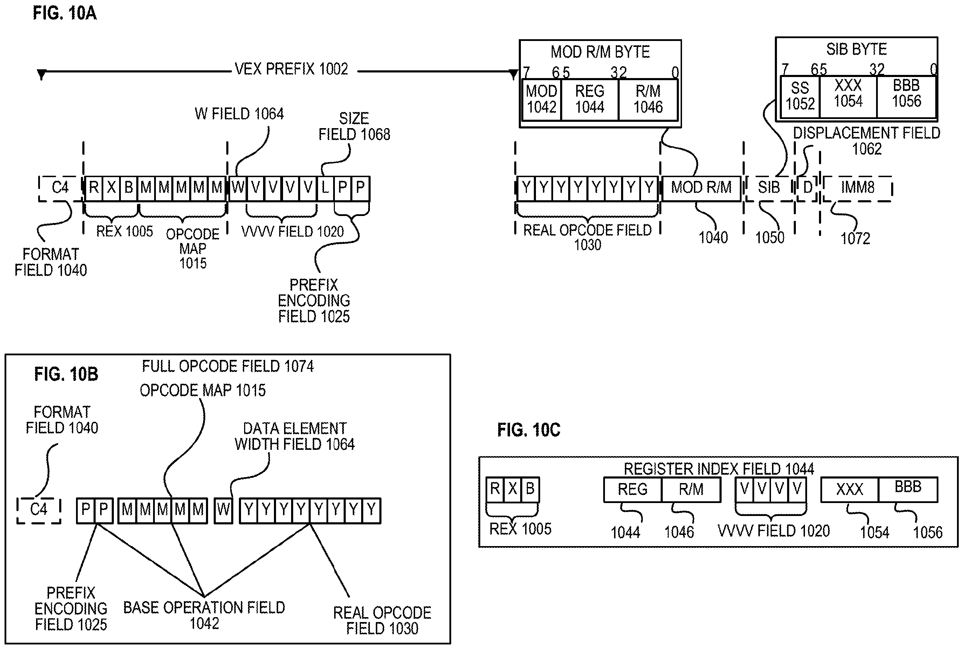

**Figure 10A** illustrates an exemplary AVX instruction format including a VEX prefix 1002, real opcode field 1030, Mod R/M byte 1040, SIB byte 1050, displacement field 1062, and IMM8 1072. **Figure 10B** illustrates which fields from **Figure 10A** make up a full opcode field 1074 and a base operation field 1042. Figure 10C illustrates which fields from Figure 10A make up a register index field 1044.

VEX Prefix (Bytes 0-2) 1002 is encoded in a three-byte form. The first byte is the Format Field 1040 (VEX Byte 0, bits [7:0]), which contains an explicit C4 byte value (the unique value used for distinguishing the C4 instruction format). The second-third bytes (VEX Bytes 1-2) include a number of bit fields providing specific capability. Specifically, REX field 1005 (VEX Byte 1, bits [7-5]) consists of a VEX.R bit field (VEX Byte 1, bit [7] - R), VEX.X bit field (VEX byte 1, bit [6] - X), and VEX.B bit field (VEX byte 1, bit[5] - B). Other fields of the instructions encode the lower three bits of the register indexes as is known in the art (rrr, xxx, and bbb), so that Rrrr, Xxxx, and Bbbb may be formed by adding VEX.R, VEX.X, and VEX.B. Opcode map field 1015 (VEX byte 1, bits [4:0] - mmmmm) includes content to encode an implied leading opcode byte. W Field 1064 (VEX byte 2, bit [7] - W) - is represented by the notation VEX.W, and provides different functions depending on the instruction. The role of VEX.vvvv 1020 (VEX Byte 2, bits [6:3]-vvvv) may include the following: 1) VEX.vvvv encodes the first source register operand, specified in inverted (Is complement) form and is valid for instructions with 2 or more source operands; 2) VEX.vvvv encodes the destination register operand, specified in Is complement form for certain vector shifts; or 3) VEX.vvvv does not encode any operand, the field is reserved and should contain 1011b. If VEX.L 1068 Size field (VEX byte 2, bit [2]-L) = 0, it indicates 128 bit vector; if VEX.L = 1, it indicates 256 bit vector. Prefix encoding field 1025 (VEX byte 2, bits [1:0]-pp) provides additional bits for the base operation field.

Real Opcode Field 1030 (Byte 3) is also known as the opcode byte. Part of the opcode is specified in this field.

MOD R/M Field 1040 (Byte 4) includes MOD field 1042 (bits [7-6]), Reg field 1044 (bits [5-3]), and R/M field 1046 (bits [2-0]). The role of Reg field 1044 may include the following: encoding either the destination register operand or a source register operand (the rrr of Rrrr), or be treated as an opcode extension and not used to encode any instruction operand. The role of R/M field 1046 may include the following: encoding the instruction operand that references a memory address, or encoding either the destination register operand or a source register operand.

Scale, Index, Base (SIB) - The content of Scale field 1050 (Byte 5) includes SS1052 (bits [7-6]), which is used for memory address generation. The contents of SIB.xxx 1054 (bits [5-3]) and SIB.bbb 1056 (bits [2-0]) have been previously referred to with regard to the register indexes Xxxx and Bbbb.

The Displacement Field 1062 and the immediate field (IMM8) 1072 contain address data.

**Exemplary Register Architecture**

**Figure 11** is a block diagram of a register architecture 1100 according to one embodiment of the invention. In the embodiment illustrated, there are 32 vector registers 1110 that are 512 bits wide; these registers are referenced as zmm0 through zmm31. The lower order 256 bits of the lower 16 zmm registers are overlaid on registers ymmO-16. The lower order 128 bits of the lower 16 zmm registers (the lower order 128 bits of the ymm registers) are overlaid on registers xmmO-15.

Write mask registers 1115 - in the embodiment illustrated, there are 8 write mask registers (k0 through k7), each 64 bits in size. In an alternate embodiment, the write mask registers 1115 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 1125 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1145, on which is aliased the MMX packed integer flat register file 1150 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

**Exemplary Core Architectures, Processors, and Computer Architectures**

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

**Exemplary Core Architectures**

**In-order and out-of-order core block diagram**

**Figure 12A** is a block diagram illustrating both an exemplary in-order pipeline and an exemplary register renaming, out-of-order issue/execution pipeline according to embodiments of the invention. Figure 12B is a block diagram illustrating both an exemplary embodiment of an in-order architecture core and an exemplary register renaming, out-of-order issue/execution architecture core to be included in a processor according to embodiments of the invention. The solid lined boxes in **Figures 12A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 12A,** a processor pipeline 1200 includes a fetch stage 1202, a length decode stage 1204, a decode stage 1206, an allocation stage 1208, a renaming stage 1210, a scheduling (also known as a dispatch or issue) stage 1212, a register read/memory read stage 1214, an execute stage 1216, a write back/memory write stage 1218, an exception handling stage 1222, and a commit stage 1224.

**Figure 12B** shows processor core 1290 including a front end unit 1230 coupled to an execution engine unit 1250, and both are coupled to a memory unit 1270. The core 1290 may be a reduced instruction set computing (RISC) core, a complex instruction set computing (CISC) core, a very long instruction word (VLIW) core, or a hybrid or alternative core type. As yet another option, the core 1290 may be a special-purpose core, such as, for example, a network or communication core, compression engine, coprocessor core, general purpose computing graphics processing unit (GPGPU) core, graphics core, or the like.

The front end unit 1230 includes a branch prediction unit 1232 coupled to an instruction cache unit 1234, which is coupled to an instruction translation lookaside buffer (TLB) 1236, which is coupled to an instruction fetch unit 1238, which is coupled to a decode unit 1240. The decode unit 1240 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1240 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1290 includes a microcode ROM or other medium that stores microcode for certain macroinstructions (e.g., in decode unit 1240 or otherwise within the front end unit 1230). The decode unit 1240 is coupled to a rename/allocator unit 1252 in the execution engine unit 1250.

The execution engine unit 1250 includes the rename/allocator unit 1252 coupled to a retirement unit 1254 and a set of one or more scheduler unit(s) 1256. The scheduler unit(s) 1256 represents any number of different schedulers, including reservations stations, central instruction window, etc. The scheduler unit(s) 1256 is coupled to the physical register file(s) unit(s) 1258. Each of the physical register file(s) units 1258 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 1258 comprises a vector registers unit, a write mask registers unit, and a scalar registers unit. These register units may provide architectural vector registers, vector mask registers, and general purpose registers. The physical register file(s) unit(s) 1258 is overlapped by the retirement unit 1254 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1254 and the physical register file(s) unit(s) 1258 are coupled to the execution cluster(s) 1260. The execution cluster(s) 1260 includes a set of one or more execution units 1262 and a set of one or more memory access units 1264. The execution units 1262 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 1256, physical register file(s) unit(s) 1258, and execution cluster(s) 1260 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1264). It should also be understood that where separate pipelines are used, one or more of these pipelines may be out-of-order issue/execution and the rest in-order.

The set of memory access units 1264 is coupled to the memory unit 1270, which includes a data TLB unit 1272 coupled to a data cache unit 1274 coupled to a level 2 (L2) cache unit 1276. In one exemplary embodiment, the memory access units 1264 may include a load unit, a store address unit, and a store data unit, each of which is coupled to the data TLB unit 1272 in the memory unit 1270. The instruction cache unit 1234 is further coupled to a level 2 (L2) cache unit 1276 in the memory unit 1270. The L2 cache unit 1276 is coupled to one or more other levels of cache and eventually to a main memory.

By way of example, the exemplary register renaming, out-of-order issue/execution core architecture may implement the pipeline 1200 as follows: 1) the instruction fetch 1238 performs the fetch and length decoding stages 1202 and 1204; 2) the decode unit 1240 performs the decode stage 1206; 3) the rename/allocator unit 1252 performs the allocation stage 1208 and renaming stage 1210; 4) the scheduler unit(s) 1256 performs the schedule stage 1212; 5) the physical register file(s) unit(s) 1258 and the memory unit 1270 perform the register read/memory read stage 1214; the execution cluster 1260 perform the execute stage 1216; 6) the memory unit 1270 and the physical register file(s) unit(s) 1258 perform the write back/memory write stage 1218; 7) various units may be involved in the exception handling stage 1222; and 8) the retirement unit 1254 and the physical register file(s) unit(s) 1258 perform the commit stage 1224.

The core 1290 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1290 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 1234/1274 and a shared L2 cache unit 1276, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

## Specific Exemplary In-Order Core Architecture

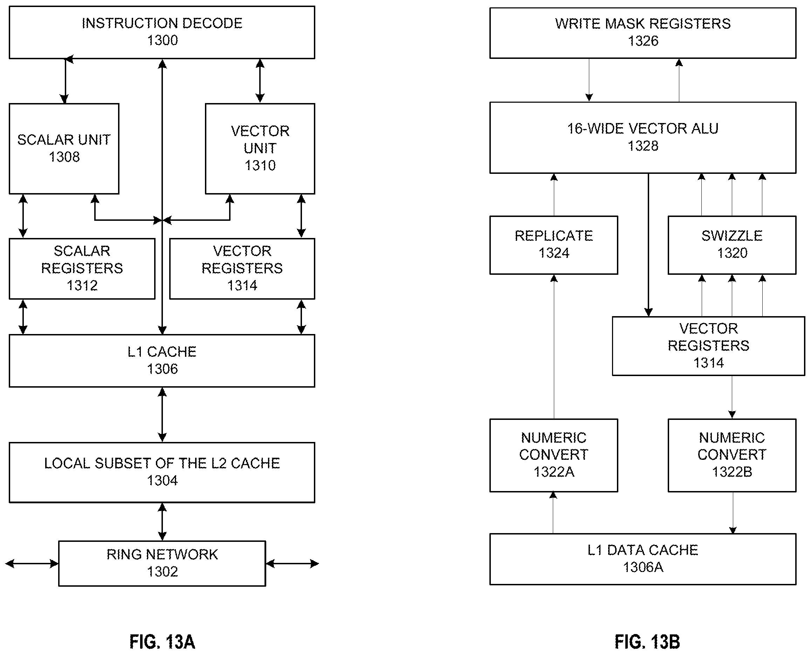

**Figures 13A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 13A** is a block diagram of a single processor core, along with its connection to the on-die interconnect network 1302 and with its local subset of the Level 2 (L2) cache 1304, according to embodiments of the invention. In one embodiment, an instruction decoder 1300 supports the x86 instruction set with a packed data instruction set extension. An L1 cache 1306 allows low-latency accesses to cache memory into the scalar and vector units. While in one embodiment (to simplify the design), a scalar unit 1308 and a vector unit 1310 use separate register sets (respectively, scalar registers 11312 and vector registers 1314) and data transferred between them is written to memory and then read back in from a level 1 (L1) cache 1306, alternative embodiments of the invention may use a different approach (e.g., use a single register set or include a communication path that allow data to be transferred between the two register files without being written and read back).

The local subset of the L2 cache 1304 is part of a global L2 cache that is divided into separate local subsets, one per processor core. Each processor core has a direct access path to its own local subset of the L2 cache 1304. Data read by a processor core is stored in its L2 cache subset 1304 and can be accessed quickly, in parallel with other processor cores accessing their own local L2 cache subsets. Data written by a processor core is stored in its own L2 cache subset 1304 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 13B** is an expanded view of part of the processor core in **Figure 13A** according to embodiments of the invention. **Figure 13B** includes an L1 data cache 1306A part of the L1 cache 1304, as well as more detail regarding the vector unit 1310 and the vector registers 1314. Specifically, the vector unit 1310 is a 16-wide vector processing unit (VPU) (see the 16-wide ALU 1328), which executes one or more of integer, single-precision float, and double-precision float instructions. The VPU supports swizzling the register inputs with swizzle unit 1320, numeric conversion with numeric convert units 1322A-B, and replication with replication unit 1324 on the memory input. Write mask registers 1326 allow predicating resulting vector writes.

## Processor with integrated memory controller and graphics

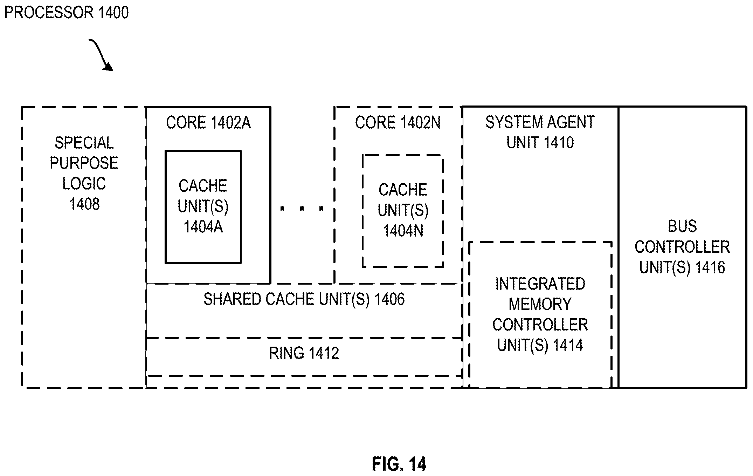

**Figure 14** is a block diagram of a processor 1400 that may have more than one core, may have an integrated memory controller, and may have integrated graphics according to embodiments of the invention. The solid lined boxes in **Figure 14** illustrate a processor 1400 with a single core 1402A, a system agent 1410, a set of one or more bus controller units 1416, while the optional addition of the dashed lined boxes illustrates an alternative processor 1400 with multiple cores 1402A-N, a set of one or more integrated memory controller unit(s) 1414 in the system agent unit 1410, and special purpose logic 1408.

Thus, different implementations of the processor 1400 may include: 1) a CPU with the special purpose logic 1408 being integrated graphics and/or scientific (throughput) logic (which may include one or more cores), and the cores 1402A-N being one or more general purpose cores (e.g., general purpose in-order cores, general purpose out-of-order cores, a combination of the two); 2) a coprocessor with the cores 1402A-N being a large number of special purpose cores intended primarily for graphics and/or scientific (throughput); and 3) a coprocessor with the cores 1402A-N being a large number of general purpose in-order cores. Thus, the processor 1400 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1400 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1406, and external memory (not shown) coupled to the set of integrated memory controller units 1414. The set of shared cache units 1406 may include one or more mid-level caches, such as level 2 (L2), level 3 (L3), level 4 (L4), or other levels of cache, a last level cache (LLC), and/or combinations thereof. While in one embodiment a ring based interconnect unit 1412 interconnects the integrated graphics logic 1408, the set of shared cache units 1406, and the system agent unit 1410/integrated memory controller unit(s) 1414, alternative embodiments may use any number of well-known techniques for interconnecting such units. In one embodiment, coherency is maintained between one or more cache units 1406 and cores 1402-A-N.

In some embodiments, one or more of the cores 1402A-N are capable of multi-threading. The system agent 1410 includes those components coordinating and operating cores 1402A-N. The system agent unit 1410 may include for example a power control unit (PCU) and a display unit. The PCU may be or include logic and components needed for regulating the power state of the cores 1402A-N and the integrated graphics logic 1408. The display unit is for driving one or more externally connected displays.

The cores 1402A-N may be homogenous or heterogeneous in terms of architecture instruction set; that is, two or more of the cores 1402A-N may be capable of execution the same instruction set, while others may be capable of executing only a subset of that instruction set or a different instruction set.

## Exemplary Computer Architectures

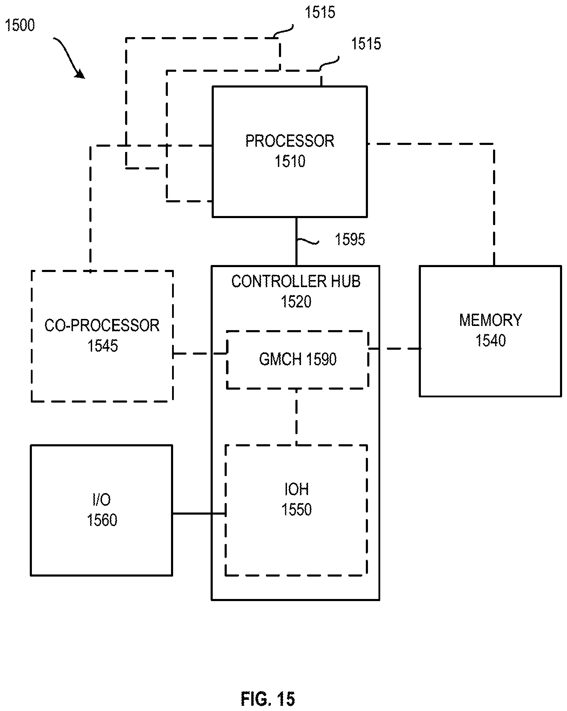

**Figures 15-21** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 15,** shown is a block diagram of a system 1500 in accordance with one embodiment of the present invention. The system 1500 may include one or more processors 1510, 1515, which are coupled to a controller hub 1520. In one embodiment the controller hub 1520 includes a graphics memory controller hub (GMCH) 1590 and an Input/Output Hub (IOH) 1550 (which may be on separate chips); the GMCH 1590 includes memory and graphics controllers to which are coupled memory 1540 and a coprocessor 1545; the IOH 1550 is couples input/output (I/O) devices 1560 to the GMCH 1590. Alternatively, one or both of the memory and graphics controllers are integrated within the processor (as described herein), the memory 1540 and the coprocessor 1545 are coupled directly to the processor 1510, and the controller hub 1520 in a single chip with the IOH 1550.

The optional nature of additional processors 1515 is denoted in **Figure 15** with broken lines. Each processor 1510, 1515 may include one or more of the processing cores described herein and may be some version of the processor 1400.

The memory 1540 may be, for example, dynamic random access memory (DRAM), phase change memory (PCM), or a combination of the two. For at least one embodiment, the controller hub 1520 communicates with the processor(s) 1510, 1515 via a multi-drop bus, such as a frontside bus (FSB), point-to-point interface such as QuickPath Interconnect (QPI), or similar connection 1595.

In one embodiment, the coprocessor 1545 is a special-purpose processor, such as, for example, a high-throughput MIC processor, a network or communication processor, compression engine, graphics processor, GPGPU, embedded processor, or the like. In one embodiment, controller hub 1520 may include an integrated graphics accelerator.

There can be a variety of differences between the physical resources 1510, 1515 in terms of a spectrum of metrics of merit including architectural, microarchitectural, thermal, power consumption characteristics, and the like.

In one embodiment, the processor 1510 executes instructions that control data processing operations of a general type. Embedded within the instructions may be coprocessor instructions. The processor 1510 recognizes these coprocessor instructions as being of a type that should be executed by the attached coprocessor 1545. Accordingly, the processor 1510 issues these coprocessor instructions (or control signals representing coprocessor instructions) on a coprocessor bus or other interconnect, to coprocessor 1545. Coprocessor(s) 1545 accept and execute the received coprocessor instructions.

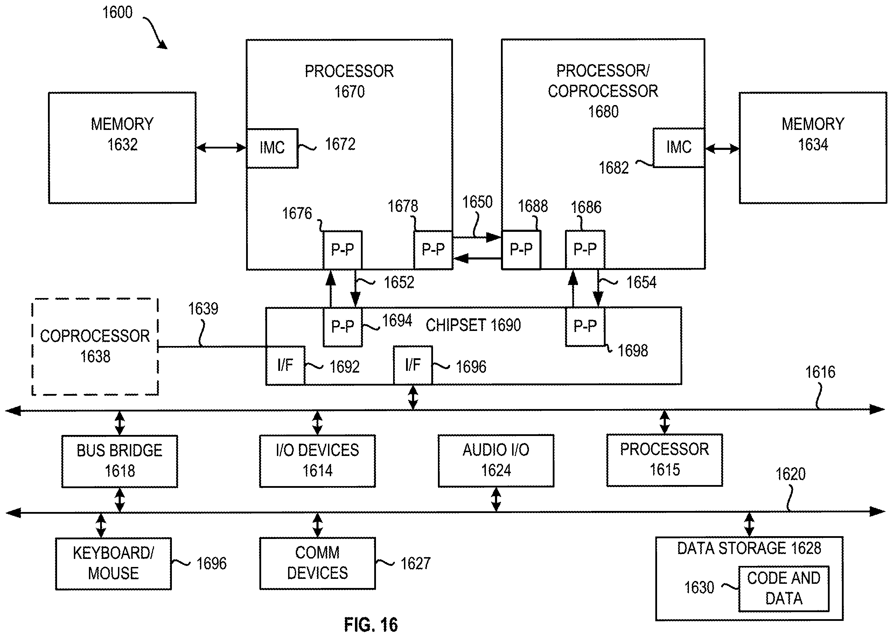

Referring now to **Figure 16,** shown is a block diagram of a first more specific exemplary system 1600 in accordance with an embodiment of the present invention. As shown in **Figure 16,** multiprocessor system 1600 is a point-to-point interconnect system, and includes a first processor 1670 and a second processor 1680 coupled via a point-to-point interconnect 1650. Each of processors 1670 and 1680 may be some version of the processor 1400. In one embodiment of the invention, processors 1670 and 1680 are respectively processors 1510 and 1515, while coprocessor 1638 is coprocessor 1545. In another embodiment, processors 1670 and 1680 are respectively processor 1510 coprocessor 1545.

Processors 1670 and 1680 are shown including integrated memory controller (IMC) units 1672 and 1682, respectively. Processor 1670 also includes as part of its bus controller units point-to-point (P-P) interfaces 1676 and 1678; similarly, second processor 1680 includes P-P interfaces 1686 and 1688. Processors 1670, 1680 may exchange information via a point-to-point (P-P) interface 1650 using P-P interface circuits 1678, 1688. As shown in **Figure 16,** IMCs 1672 and 1682 couple the processors to respective memories, namely a memory 1632 and a memory 1634, which may be portions of main memory locally attached to the respective processors.

Processors 1670, 1680 may each exchange information with a chipset 1690 via individual P-P interfaces 1652, 1654 using point to point interface circuits 1676, 1694, 1686, 1698. Chipset 1690 may optionally exchange information with the coprocessor 1638 via a high-performance interface 1639. In one embodiment, the coprocessor 1638 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1690 may be coupled to a first bus 1616 via an interface 1696. In one embodiment, first bus 1616 may be a Peripheral Component Interconnect (PCI) bus, or a bus such as a PCI Express bus or another third generation I/O interconnect bus, although the scope of the present invention is not so limited.

As shown in **Figure 16,** various I/O devices 1614 may be coupled to first bus 1616, along with a bus bridge 1618 which couples first bus 1616 to a second bus 1620. In one embodiment, one or more additional processor(s) 1615, such as coprocessors, high-throughput MIC processors, GPGPU's, accelerators (such as, e.g., graphics accelerators or digital signal processing (DSP) units), field programmable gate arrays, or any other processor, are coupled to first bus 1616. In one embodiment, second bus 1620 may be a low pin count (LPC) bus. Various devices may be coupled to a second bus 1620 including, for example, a keyboard and/or mouse 1622, communication devices 1627 and a storage unit 1628 such as a disk drive or other mass storage device which may include instructions/code and data 1630, in one embodiment. Further, an audio I/O 1624 may be coupled to the second bus 1620. Note that other architectures are possible. For example, instead of the point-to-point architecture of **Figure 16,** a system may implement a multi-drop bus or other such architecture.

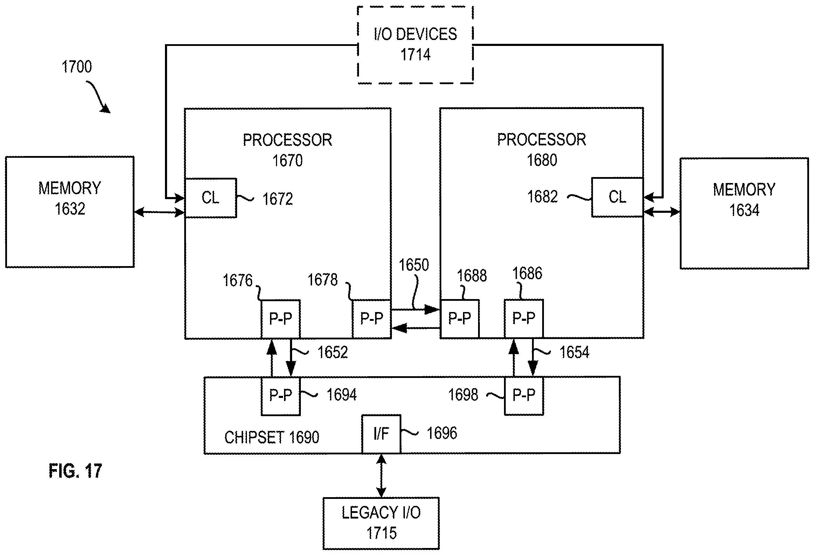

Referring now to **Figure 17,** shown is a block diagram of a second more specific exemplary system 1700 in accordance with an embodiment of the present invention. Like elements in **Figures 16 and 17** bear like reference numerals, and certain aspects of **Figure 16** have been omitted from **Figure 17** in order to avoid obscuring other aspects of **Figure 17.**

**Figure 17** illustrates that the processors 1670, 1680 may include integrated memory and I/O control logic ("CL") 1672 and 1682, respectively. Thus, the CL 1672, 1682 include integrated memory controller units and include I/O control logic. **Figure 17** illustrates that not only are the memories 1632, 1634 coupled to the CL 1672, 1682, but also that I/O devices 1714 are also coupled to the control logic 1672, 1682. Legacy I/O devices 1715 are coupled to the chipset 1690.

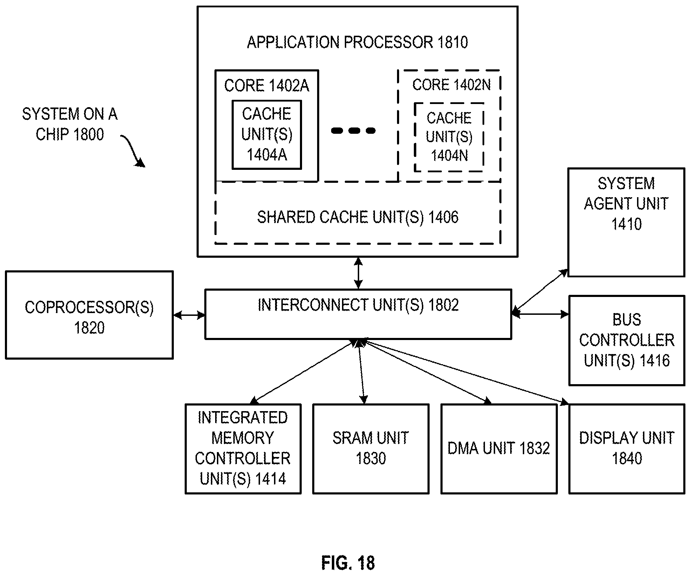

Referring now to **Figure 18,** shown is a block diagram of a SoC 1800 in accordance with an embodiment of the present invention. Similar elements in **Figure 14** bear like reference numerals. Also, dashed lined boxes are optional features on more advanced SoCs. In **Figure 18,** an interconnect unit(s) 1802 is coupled to: an application processor 1810 which includes a set of one or more cores 172A-N and shared cache unit(s) 1406; a system agent unit 1410; a bus controller unit(s) 1416; an integrated memory controller unit(s) 1414; a set or one or more coprocessors 1820 which may include integrated graphics logic, an image processor, an audio processor, and a video processor; an static random access memory (SRAM) unit 1830; a direct memory access (DMA) unit 1832; and a display unit 1840 for coupling to one or more external displays. In one embodiment, the coprocessor(s) 1820 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1630 illustrated in **Figure 16,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

**Emulation (including binary translation, code morphing, etc.)**

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

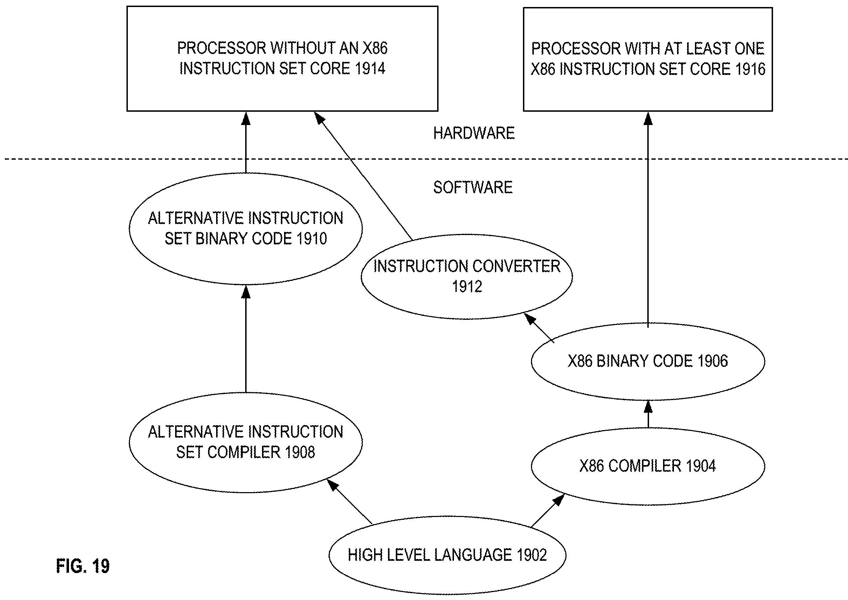

**Figure 19** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **Figure 19** shows a program in a high level language 1902 may be compiled using an x86 compiler 1904 to generate x86 binary code 1906 that may be natively executed by a processor with at least one x86 instruction set core 1916. The processor with at least one x86 instruction set core 1916 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1904 represents a compiler that is operable to generate x86 binary code 1906 (e.g., object code) that can, with or without additional linkage processing, be executed on the processor with at least one x86 instruction set core 1916. Similarly, **Figure 19** shows the program in the high level language 1902 may be compiled using an alternative instruction set compiler 1908 to generate alternative instruction set binary code 1910 that may be natively executed by a processor without at least one x86 instruction set core 1914 (e.g., a processor with cores that execute the MIPS instruction set of MIPS Technologies of Sunnyvale, CA and/or that execute the ARM instruction set of ARM Holdings of Sunnyvale, CA). The instruction converter 1912 is used to convert the x86 binary code 1906 into code that may be natively executed by the processor without an x86 instruction set core 1914. This converted code is not likely to be the same as the alternative instruction set binary code 1910 because an instruction converter capable of this is difficult to make; however, the converted code will accomplish the general operation and be made up of instructions from the alternative instruction set. Thus, the instruction converter 1912 represents software, firmware, hardware, or a combination thereof that, through emulation, simulation or any other process, allows a processor or other electronic device that does not have an x86 instruction set processor or core to execute the x86 binary code 1906.

Components, features, and details described for any of **Figures 3-9** may also optionally apply to any of **Figures 1-2.** Moreover, components, features, and details described for any of the apparatus may also optionally apply to any of the methods, which in embodiments may be performed by and/or with such apparatus. Any of the processors described herein may be included in any of the computer systems disclosed herein (e.g., **Figures 15-17**) or a SoC (e.g., **Figure 18**). The instructions disclosed herein may be performed with any of the processors shown herein, having any of the microarchitectures shown herein, on any of the systems shown herein. The instructions disclosed herein may have any of the features of the instruction formats shown herein (e.g., in **Figure 7** and/or **Figure 10A-C**).

In the description and claims, the terms "coupled" and/or "connected," along with their derivatives, may have be used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, but yet still co-operate or interact with each other. For example, an execution unit may be coupled with a register and/or a decode unit through one or more intervening components. In the figures, arrows are used to show connections and couplings.

The term "and/or" may have been used. As used herein, the term "and/or" means one or the other or both (e.g., A and/or B means A or B or both A and B).

In the description above, specific details have been set forth in order to provide a thorough understanding of the embodiments. However, other embodiments may be practiced without some of these specific details. The scope of the invention is not to be determined by the specific examples provided above, but only by the claims below. In other instances, well-known circuits, structures, devices, and operations have been shown in block diagram form and/or without detail in order to avoid obscuring the understanding of the description. Where considered appropriate, reference numerals, or terminal portions of reference numerals, have been repeated among the figures to indicate corresponding or analogous elements, which may optionally have similar or the same characteristics, unless specified or clearly apparent otherwise.

Certain operations may be performed by hardware components, or may be embodied in machine-executable or circuit-executable instructions, that may be used to cause and/or result in a machine, circuit, or hardware component (e.g., a processor, potion of a processor, circuit, etc.) programmed with the instructions performing the operations. The operations may also optionally be performed by a combination of hardware and software. A processor, machine, circuit, or hardware may include specific or particular circuitry or other logic (e.g., hardware potentially combined with firmware and/or software) is operative to execute and/or process the instruction and store a result in response to the instruction.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Reference throughout this specification to "one embodiment," "an embodiment," "one or more embodiments," "some embodiments," for example, indicates that a particular feature may be included in the practice of the invention but is not necessarily required to be. Similarly, in the description various features are sometimes grouped together in a single embodiment, Figure, or description thereof for the purpose of streamlining the disclosure and aiding in the understanding of various inventive aspects. This method of disclosure, however, is not to be interpreted as reflecting an intention that the invention requires more features than are expressly recited in each claim. Rather, as the following claims reflect, inventive aspects lie in less than all features of a single disclosed embodiment.

**Claims**

**1.** A processor (100) comprising:

a plurality of registers (110, 114) that are operative to store packed data;

a decode unit (104) operative to decode an adjoining data element pairwise swap instruction (102), the adjoining data element pairwise swap instruction (102) to indicate a source packed data that is to include a plurality of pairs of adjoining data elements, and to indicate a destination storage location; and

an execution unit (106) coupled with the plurality of packed data registers (110, 114) and the decode unit (104), the execution unit (106) operative, in response to the adjoining data element pairwise swap instruction (102), to store a result packed data in the destination storage location, the result packed data to include a plurality of pairs of adjoining data elements, each pair of adjoining data elements of the result packed data to correspond to a different pair of adjoining data elements of the source packed data, the adjoining data elements in each pair of adjoining data elements of the result packed data to have been swapped in position relative to the adjoining data elements in each corresponding pair of adjoining data elements of the source packed data;

wherein the decode unit (104) is to decode the instruction (102) that is to indicate a source packed data operation mask (420), comprising a plurality of mask elements ;

wherein the execution unit (106), in response to the instruction (102), is to store the result packed data that is to include an additional pair of adjoining data elements, which is to correspond to an additional pair of adjoining data elements of the source packed data, and which is to correspond to at least one masked-out mask element of the source packed data operation mask (420), and in which in which the adjoining data elements in the additional pair of the result packed data are not to have been swapped in position relative to the adjoining data elements in the corresponding additional pair of adjoining data elements;

**characterized in that**

each mask element is to comprise a single mask element that is to correspond to both data elements of a respective pair of adjoining data elements of the result packed data.

2. The processor (100) of claim 1, wherein the adjoining data elements in each pair of the result packed data being swapped in position relative to the adjoining data elements in each corresponding pair of the source packed data is to be implicit to an opcode of the instruction (102).

3. The processor (100) of any one of claims 1 to 2, wherein the decode unit (104) is to decode the instruction (102) that is to indicate only a single source operand which is to be the source packed data, and wherein the decode unit (104) is to decode the instruction (102) that is to indicate the source packed data that is to include the pairs of adjoining data elements which are to be at least one of multi-byte data elements and floating point data elements.

4. The processor (100) of claim 1, wherein the at least one masked-out mask element is to comprise a single masked-out mask element that is to correspond to both the data elements of the additional pair of adjoining data elements of the result packed data.

5. The processor (100) of any one of claims 1 to 4, wherein the decode unit (104) is also to decode one of a shuffle instruction and a permute instruction, which is to be of a same instruction set as the adjoining data element pairwise swap instruction (102), and wherein said one of the shuffle and permute instructions is to have a longer instruction length in bits than the adjoining data element pairwise swap instruction (102).

6. The processor (100) of any one of claims 1 to 5, wherein the decode unit (104) is also to decode one of a shuffle instruction and a permute instruction, which is to be of a same instruction set as the adjoining data element pairwise swap instruction (102), and wherein the processor is to perform the adjoining data element pairwise swap instruction (102) in at least one clock cycle less than an amount of time to perform said one of the shuffle and permute instruction.

7. A method performed by a processor (100), the method comprising:

receiving an adjoining data element pairwise swap instruction (102), the adjoining data element pairwise swap instruction (102) indicating a source packed data including a plurality of pairs of adjoining data elements, and indicating a destination storage location; and

storing a result packed data in the destination storage location in response to the adjoining data element pairwise swap instruction (102), the result packed data including a plurality of pairs of adjoining data elements, each pair of adjoining data elements of the result packed data corresponding to a different pair of adjoining data elements of the source packed data, the adjoining data elements in each pair of adjoining data elements of the result packed data swapped in position relative to the adjoining data elements in each corresponding pair of adjoining data elements of the source packed data;

wherein the instruction (102) is to indicate a source packed data operation mask (420), comprising a plurality of mask elements;

wherein the result packed data is to include an additional pair of adjoining data elements, which is to correspond to an additional pair of adjoining data elements of the source packed data, and which is to correspond to at least one masked-out mask element of the source packed data operation mask (420), and in which the adjoining data elements in the additional pair of the result packed data are not to have been swapped in position relative to the adjoining data elements in the corresponding additional pair of adjoining data elements;

**characterized in that**

each mask element is to comprise a single mask element that is to correspond to both data elements of a respective pair of adjoining data elements of the result packed data.

8. The method of claim 7, wherein swapping in position the adjoining data elements in each pair of the result packed data relative to the adjoining data elements in each corresponding pair of the source packed data is implicit for an opcode of the instruction (102), wherein receiving comprises receiving the instruction (102) that indicates the source packed data that includes the pairs of adjoining data elements which are at least one of multi-byte data elements and floating point data elements.

9. A machine-readable medium storing instructions, which when executed by a machine, is operative to cause the machine to perform the method of any one of claims 7 to 8, the machine comprising a processor (100) of any one of claims 1 to 6.

**Patentansprüche**

1. Prozessor (100), der Folgendes umfasst:

mehrere Register (110, 114), die betreibbar sind zum Speichern gepackter Daten;

eine Decodiereinheit (104), die betreibbar ist zum Decodieren eines paarweisen Tauschbefehls (102) für nebeneinander liegende Datenelemente, wobei der paarweise Tauschbefehl (102) für nebeneinander liegende Datenelemente ausgelegt ist zum Angeben gepackter Quelldaten, die mehrere Paare nebeneinander liegender Datenelemente enthalten sollen, und Angeben eines Zielspeicherorts; und

eine Ausführungseinheit (106), die mit den mehreren Registern (110, 114) für gepackte Daten und der Decodiereinheit (104) gekoppelt ist, wobei die Ausführungseinheit (106) betreibbar ist, in Reaktion auf den paarweisen Tauschbefehl (102) für nebeneinander liegende Datenelemente gepackte Ergebnisdaten am Zielspeicherort zu speichern, wobei die gepackten Ergebnisdaten mehrere Paare nebeneinander liegender Datenelemente enthalten sollen, jedes Paar nebeneinander liegender Datenelemente der gepackten Ergebnisdaten einem verschiedenen Paar nebeneinander liegender Datenelemente der gepackten Quelldaten entsprechen soll und die Positionen der nebeneinander liegenden Datenelemente in jedem Paar nebeneinander liegender Datenelemente der gepackten Ergebnisdaten in Bezug auf die nebeneinander liegenden Datenelemente in jedem entsprechenden Paar nebeneinander liegender Datenelemente der gepackten Quelldaten getauscht worden sein sollen; wobei

die Decodiereinheit (104) ausgelegt ist zum Decodieren des Befehls (102), der eine Vorgangsmaske (420) für gepackte Quelldaten, die mehrere Maskenelemente umfasst, angeben soll; und

die Ausführungseinheit (106) ausgelegt ist, in Reaktion auf den Befehl (102) die gepackten Ergebnisdaten zu speichern, die ein zusätzliches Paar nebeneinander liegender Datenelemente enthalten sollen, das einem zusätzlichen Paar nebeneinander liegender Datenelemente der gepackten Quelldaten entsprechen soll, das mindestens einem maskierten Maskenelement der Vorgangsmasken für gepackte Quelldaten (420) entsprechen soll und in dem die Positionen der nebeneinander liegenden Datenelemente im zusätzlichen Paar der gepackten Ergebnisdaten in Bezug auf die nebeneinander liegenden Datenelemente im entsprechenden zusätzlichen Paar nebeneinander liegender Datenelemente nicht getauscht worden sein müssen;

**dadurch gekennzeichnet, dass**

jedes Maskenelement ausgelegt ist, ein einzelnes Maskenelement zu umfassen, das beiden Datenelementen eines jeweiligen Paars nebeneinander liegender Datenelemente der gepackten Ergebnisdaten entsprechen soll.

2. Prozessor (100) nach Anspruch 1, wobei einem Befehlscode des Befehls (102) implizit sein soll, dass die Positionen der nebeneinander liegenden Datenelemente in jedem Paar der gepackten Ergebnisdaten in Bezug auf die nebeneinander liegenden Datenelemente in jedem entsprechenden Paar der gepackten Quelldaten getauscht sind.

3. Prozessor (100) nach einem der Ansprüche 1 bis 2, wobei die Decodiereinheit (104) ausgelegt ist zum Decodieren des Befehls (102), der ausgelegt ist, lediglich einen Einzelquellenoperanden, der die gepackten Quelldaten sein soll, anzugeben, und wobei die Decodiereinheit (104) ausgelegt ist, den Befehl (102) zu decodieren, der ausgelegt ist, die gepackten Quelldaten anzugeben, die die Paare nebeneinander liegender Datenelemente, die Mehrbytedatenelemente und/oder Gleitkommadatenelemente sein sollen, enthalten sollen.

4. Prozessor (100) nach Anspruch 1, wobei das mindestens eine maskierte Maskenelement ein einzelnes maskiertes Maskenelement umfassen soll, das ausgelegt ist, beiden Datenelementen des zusätzlichen Paars von nebeneinander liegenden Datenelemente der gepackten Ergebnisdaten zu entsprechen.

5. Prozessor (100) nach einem der Ansprüche 1 bis 4, wobei die Decodiereinheit (104) außerdem ausgelegt ist, einen eines Mischbefehls und eines Tauschbefehls zu decodieren, der aus demselben Befehlssatz wie der paarweise Tauschbefehl (102) für nebeneinander liegende Datenelemente sein soll, und wobei der eine des Misch-und des Tauschbefehls ausgelegt ist, eine längere Befehlslänge in Bits aufzuweisen als der paarweise Tauschbefehl (102) für nebeneinander liegende Datenelemente.

6. Prozessor (100) nach einem der Ansprüche 1 bis 5, wobei die Decodiereinheit (104) außerdem ausgelegt ist, einen eines Mischbefehls und eines Tauschbefehls zu decodieren, der aus demselben Befehlssatz wie der paarweise Tauschbefehl (102) für nebeneinander liegende Datenelemente sein soll, und wobei der Prozessor ausgelegt ist, den paarweisen Tauschbefehl (102) für nebeneinander liegende Datenelemente in mindestens einem Taktzyklus durchzuführen, der kleiner als eine Zeitspanne zum Durchführen des einen des Misch- und des Tauschbefehls ist.

7. Verfahren, das durch einen Prozessor (100) durchgeführt wird, wobei das Verfahren Folgendes umfasst:

Empfangen eines paarweisen Tauschbefehls (102) für nebeneinander liegende Datenelemente, wobei der paarweise Tauschbefehl (102) für nebeneinander liegende Datenelemente gepackte Quelldaten, die mehrere Paare von nebeneinander liegenden Datenelemente enthalten, angibt und einen Zielspeicherort angibt; und Speichern gepackter Ergebnisdaten am Zielspeicherort in Reaktion auf den paarweisen Tauschbefehl (102) für nebeneinander liegende Datenelemente, wobei die gepackten Ergebnisdaten mehrere Paare nebeneinander liegender Datenelemente enthalten, jedes Paar nebeneinander liegender Datenelemente der gepackten Ergebnisdaten einem verschiedenen Paar nebeneinander liegender Datenelemente der gepackten Quelldaten entspricht und die Positionen der nebeneinander liegenden Datenelemente in jedem Paar nebeneinander liegender Datenelemente der gepackten Ergebnisdaten in Bezug auf die nebeneinander liegenden Datenelemente in jedem entsprechenden Paar nebeneinander liegender Datenelemente der gepackten Quelldaten getauscht sind; wobei

der Befehl (102) ausgelegt ist, eine Vorgangsmaske (420) für gepackte Quelldaten, die mehrere Maskenelemente umfasst, anzugeben; und

die gepackten Ergebnisdaten ausgelegt sind, ein zusätzliches Paar nebeneinander liegender Datenelemente zu enthalten, das einem zusätzlichen Paar nebeneinander liegender Datenelemente der gepackten Quelldaten entsprechen soll, das mindestens einem maskierten Maskenelement der Vorgangsmasken für gepackte Quelldaten (420) entsprechen soll und in dem die Positionen der nebeneinander liegenden Datenelemente im zusätzlichen Paar der gepackten Ergebnisdaten in Bezug auf die nebeneinander liegenden Datenelemente im entsprechenden zusätzlichen Paar nebeneinander liegender Datenelemente nicht getauscht worden sein müssen;

**dadurch gekennzeichnet, dass**

jedes Maskenelement ausgelegt ist, ein einzelnes Maskenelement zu umfassen, das beiden Datenelementen eines jeweiligen Paars nebeneinander liegender Datenelemente der gepackten Ergebnisdaten entsprechen soll.

8. Verfahren nach Anspruch 7, wobei das Tauschen der Positionen der nebeneinander liegenden Datenelemente in jedem Paar der gepackten Ergebnisdaten in Bezug auf die nebeneinander liegenden Datenelemente in jedem entsprechenden Paar der gepackten Quelldaten einem Befehlscode des Befehls (102) implizit ist und das Empfangen ein Empfangen des Befehls (102) umfasst, der die gepackten Quelldaten angibt, die die Paare von nebeneinander liegenden Datenelementen, die Mehrbytedatenelemente und/oder Gleitkommadatenelemente sind, enthalten.

9. Maschinenlesbares Medium, in dem Befehle gespeichert sind, die, wenn sie durch eine Maschine ausgeführt werden, betreibbar sind, die Maschine zu veranlassen, das Verfahren nach einem der Ansprüche 7 bis 8 durchzuführen, wobei die Maschine einen Prozessor (100) nach einem der Ansprüche 1 bis 6 umfasst.

**Revendications**

1. Processeur (100), comprenant :

   une pluralité de registres (110, 114) qui ont pour fonction de stocker des données condensées ;
   une unité de décodage (104) ayant pour fonction de décoder une instruction d'échange par paires d'éléments de données adjacents (102), l'instruction d'échange par paires d'éléments de données adjacents (102) étant appelée à indiquer des données condensées sources appelées à contenir une pluralité de paires d'éléments de données adjacents et appelées à indiquer un emplacement de stockage de destination ; et
   une unité d'exécution (106) couplée à la pluralité de registres (110, 114) de données condensées et à l'unité de décodage (104), l'unité d'exécution (106) ayant pour fonction, en réponse à l'instruction d'échange par paires d'éléments de données adjacents (102), de stocker des données condensées de résultat à l'emplacement de stockage de destination, les données condensées de résultat étant appelées à contenir une pluralité de paires d'éléments de données adjacents, chaque paire d'éléments de données adjacents des données condensées de résultat étant appelée à correspondre à une paire différente d'éléments de données adjacents des données condensées sources, les éléments de données adjacents dans chaque paire d'éléments de données adjacents des données condensées de résultat étant appelées à avoir été échangés en position par rapport aux éléments de données adjacents dans chaque paire correspondante d'éléments de données adjacents des données condensées sources ;
   l'unité de décodage (104) étant appelée à décoder l'instruction (102) qui est appelée à indiquer un masque d'opération sur données condensées sources (420), comprenant une pluralité d'éléments de masque ;
   l'unité d'exécution (106), en réponse à l'instruction (102), étant appelée à stocker les données condensées de résultat qui sont appelées à contenir une paire additionnelle d'éléments de données adjacents, qui est appelée à correspondre à une paire additionnelle d'éléments de données adjacents des données condensées sources, et qui est appelée à correspondre à au moins un élément de masque masqué du masque d'opération sur données condensées sources (420), et les éléments de données adjacents dans la paire additionnelle des données condensées de résultat n'étant pas appelés à avoir été échangés en position par rapport aux éléments de données adjacents dans la paire additionnelle correspondante d'éléments de données adjacents ;
   **caractérisé en ce que**
   chaque élément de masque est appelé à comprendre un seul élément de masque qui est appelé à correspondre aux deux éléments de données d'une paire respective d'éléments de données adjacents des données condensées de résultat.

2. Processeur (100) selon la revendication 1, dans lequel l'échange en position des éléments de données adjacents dans chaque paire des données condensées de résultat par rapport aux éléments de données adjacents dans chaque paire correspondante des données condensées sources est appelé à être implicite vis-à-vis d'un code opération de l'instruction (102).

3. Processeur (100) selon l'une quelconque des revendications 1 à 2, dans lequel l'unité de décodage (104) est appelée à décoder l'instruction (102) qui est appelée à indiquer uniquement un seul opérande source qui est appelé à former les données condensées sources, et dans lequel l'unité de décodage (104) est appelée à décoder l'instruction (102) qui est appelée à indiquer les données condensées sources qui sont appelées à contenir les paires d'éléments de données adjacents qui sont appelés à former des éléments de données multi-octets et/ou des éléments de données en virgule flottante.

4. Processeur (100) selon la revendication 1, dans lequel l'au moins un élément de masque masqué est appelé à comprendre un seul élément de masque masqué qui est appelé à correspondre aux deux éléments de données de la paire additionnelle d'éléments de données adjacents des données condensées de résultat.

5. Processeur (100) selon l'une quelconque des revendications 1 à 4, dans lequel l'unité de décodage (104) est également appelée à décoder une instruction parmi une instruction de mélange aléatoire et une instruction de permutation, laquelle est appelée à appartenir à un même jeu d'instructions que l'instruction d'échange par paires d'éléments de données adjacents (102), et dans lequel ladite une instruction parmi les instructions de mélange aléatoire et de permutation est appelée à présenter une longueur d'instruction plus longue en bits que l'instruction d'échange par paires d'éléments de données adjacents (102).

6. Processeur (100) selon l'une quelconque des revendications 1 à 5, dans lequel l'unité de décodage (104) est également appelée à décoder une instruction parmi une instruction de mélange aléatoire et une instruction de permutation, laquelle est appelée à appartenir à un même jeu d'instructions que l'instruction d'échange par paires d'éléments de données adjacents (102), et lequel processeur est appelé à réaliser l'instruction d'échange par paires d'éléments de données adjacents (102) dans au moins un cycle d'horloge de moins qu'un laps de temps nécessaire à la réalisation de ladite une instruction parmi les instructions de mélange aléatoire et de permutation.

7. Procédé réalisé par un processeur (100), le procédé comprenant :

la réception d'une instruction d'échange par paires d'éléments de données adjacents (102), l'instruction d'échange par paires d'éléments de données adjacents (102) indiquant des données condensées sources contenant une pluralité de paires d'éléments de données adjacents et indiquant un emplacement de stockage de destination ; et

le stockage de données condensées de résultat à l'emplacement de stockage de destination en réponse à l'instruction d'échange par paires d'éléments de données adjacents (102), les données condensées de résultat contenant une pluralité de paires d'éléments de données adjacents, chaque paire d'éléments de données adjacents des données condensées de résultat correspondant à une paire différente d'éléments de données adjacents des données condensées sources, les éléments de données adjacents dans chaque paire d'éléments de données adjacents des données condensées de résultat ayant été échangés en position par rapport aux éléments de données adjacents dans chaque paire correspondante d'éléments de données adjacents des données condensées sources ;

l'instruction (102) étant appelée à indiquer un masque d'opération sur données condensées sources (420), comprenant une pluralité d'éléments de masque ;

les données condensées de résultat étant appelées à contenir une paire additionnelle d'éléments de données adjacents, qui est appelée à correspondre à une paire additionnelle d'éléments de données adjacents des données condensées sources, et qui est appelée à correspondre à au moins un élément de masque masqué du masque d'opération sur données condensées sources (420), et les éléments de données adjacents dans la paire additionnelle des données condensées de résultat n'étant pas appelés à avoir été échangés en position par rapport aux éléments de données adjacents dans la paire additionnelle correspondante d'éléments de données adjacents ;

**caractérisé en ce que**

chaque élément de masque est appelé à comprendre un seul élément de masque qui est appelé à correspondre aux deux éléments de données d'une paire respective d'éléments de données adjacents des données condensées de résultat.

8. Procédé selon la revendication 7, dans lequel l'échange en position des éléments de données adjacents dans chaque paire des données condensées de résultat par rapport aux éléments de données adjacents dans chaque paire correspondante des données condensées sources est implicite vis-à-vis d'un code opération de l'instruction (102), la réception comprenant la réception de l'instruction (102) qui indique les données condensées sources qui contiennent les paires d'éléments de données adjacents qui forment des éléments de données multi-octets et/ou des éléments de données en virgule flottante.

9. Support lisible par machine stockant des instructions qui, lorsqu'elles sont exécutées par une machine, ont pour fonction d'amener la machine à réaliser le procédé selon l'une quelconque des revendications 7 à 8, la machine comprenant le processeur (100) selon l'une quelconque des revendications 1 à 6.

FIG. 1

PROCESSOR
100

ADJOINING DATA
ELEMENT
PAIRWISE SWAP
INSTRUCTION
102

DECODE
UNIT
104

EXECUTION
UNIT
106

PACKED DATA REGISTERS
108

SOURCE PACKED DATA REGISTER
110

SOURCE PACKED DATA HAVING PAIRS OF
ADJOINING DATA ELEMENTS
112

DESTINATION STORAGE LOCATION
114

RESULT PACKED DATA HAVING PAIRS
OF ADJOINING DATA ELEMENTS
CORRESPONDING TO PAIRS IN
SOURCE PACKED DATA, WHERE
ADJOINING DATA ELEMENTS IN EACH
PAIR IN RESULT PACKED DATA ARE
SWAPPED IN POSITION RELATIVE TO
ADJOINING DATA ELEMENTS IN
CORRESPONDING PAIR IN SOURCE
PACKED DATA
116

PACKED DATA OPERATION MASK
REGISTERS (OPTIONAL)
118

SOURCE PACKED DATA OPERATION
MASK (OPTIONAL)
120

EP 3 394 725 B1

## FIG. 2

METHOD IN
PROCESSOR
226

RECEIVE ADJOINING DATA ELEMENT PAIRWISE
SWAP INSTRUCTION INDICATING SOURCE PACKED
DATA THAT INCLUDES PAIRS OF ADJOINING DATA
ELEMENTS, AND INDICATING DESTINATION
STORAGE LOCATION

227

STORE RESULT PACKED DATA IN DESTINATION
STORAGE LOCATION IN RESPONSE TO
INSTRUCTION, RESULT PACKED DATA INCLUDING
PAIRS OF ADJOINING DATA ELEMENTS, EACH PAIR
OF ADJOINING DATA ELEMENTS OF RESULT PACKED
DATA CORRESPONDING TO DIFFERENT PAIR OF
ADJOINING DATA ELEMENTS OF SOURCE PACKED DATA,
ADJOINING DATA ELEMENTS IN EACH PAIR OF RESULT
PACKED DATA SWAPPED IN POSITION RELATIVE TO
ADJOINING DATA ELEMENTS IN EACH CORRESPONDING
PAIR OF SOURCE PACKED DATA

228

FIG. 3

ADJOINING DATA ELEMENT PAIRWISE SWAP OPERATION 330

SOURCE PACKED DATA 312

$A_0$ $A_1$ $A_2$ $A_3$

EXECUTION UNIT 306

332 SWAPPED IN RELATIVE POSITION

RESULT PACKED DATA 316

$A_1$ $A_0$ $A_3$ $A_2$

**FIG. 4**

ADJOINING DATA ELEMENT
PAIRWISE SWAP OPERATION
430

SOURCE PACKED DATA 412

| 0 | | | |
|---|---|---|---|
| $A_0$ | $A_1$ | $A_2$ | $A_3$ |

SOURCE PACKED DATA OPERATION MASK 420

| 0 | | | |
|---|---|---|---|
| 0 (MASKED) | 0 | 1 (UNMASKED) | 1 |

EXECUTION UNIT 406

RESULT PACKED DATA 416

| 0 | | | |
|---|---|---|---|
| $A_0$ (or Zero) | $A_1$ (or Zero) | $A_3$ | $A_2$ |

**FIG. 5**

ADJOINING DATA ELEMENT
PAIRWISE SWAP OPERATION
*530*

| $A_0$ | $A_1$ | $A_2$ | $A_3$ |
|---|---|---|---|

SOURCE PACKED DATA *512*

0

| 0 (MASKED) | 1 (UNMASKED) |
|---|---|

SOURCE PACKED DATA OPERATION MASK *520*

0

EXECUTION UNIT
*506*

| $A_0$ (or Zero) | $A_1$ (or Zero) | $A_3$ | $A_2$ |
|---|---|---|---|

RESULT PACKED DATA *516*

0

EP 3 394 725 B1

**FIG. 6**

ADJOINING DATA ELEMENT
PAIRWISE SWAP OPERATION
*630*

| | | | | | | | | |
|---|---|---|---|---|---|---|---|---|
| 0 | 63 | 127 | | | | | 511 | SOURCE PACKED DATA |
| $r_0$ | $i_0$ | $r_1$ | $i_1$ | $r_2$ | $i_2$ | $r_3$ | $i_3$ | *612* |

| 0 | 1 | 2 | 3 | 4 | 5 | 6 | 7 | 63 | SOURCE PACKED DATA OPERATION MASK REGISTER |
|---|---|---|---|---|---|---|---|---|---|
| 1 | 1 | 0 | 0 | 1 | 1 | 1 | 1 | | *618* |

*620*
SOURCE PACKED DATA
OPERATION MASK

EXECUTION UNIT
*606*

| | | | | | | | | |
|---|---|---|---|---|---|---|---|---|
| 0 | 63 | 127 | | | | | 511 | RESULT PACKED DATA |
| $i_0$ | $r_0$ | $r_1$ | $i_1$ | $i_2$ | $r_2$ | $i_3$ | $r_3$ | *616* |

FIG. 7

ADJOINING DATA ELEMENT
PAIRWISE SWAP INSTRUCTION
702

| OPCODE 740 (E.G., TO IMPLICITLY OR FIXEDLY INDICATE ADJOINING DATA ELEMENT PAIRWISE SWAP) | SOURCE PACKED DATA SPECIFIER 742 | DESTINATION STORAGE LOCATION SPECIFIER (OPTIONAL) 744 | SOURCE MASK SPECIFIER (OPTIONAL) 746 | TYPE OF MASKING SPECIFIER (OPTIONAL) 748 | DATA ELEMENT SIZE SPECIFIER (OPTIONAL) 750 | NON-OPCODE SWAP CONTROL BITS 752 |
|---|---|---|---|---|---|---|

EP 3 394 725 B1

# FIG. 8

PACKED DATA
REGISTERS
808

512 BITS

| zmm$_0$ | ymm$_0$ | xmm$_0$ |
| | ymm$_{15}$ | xmm$_{15}$ |

128 BITS

256 BITS

zmm$_{31}$

# FIG. 9

PACKED DATA
OPERATION MASK
REGISTERS
*918*

63                                                                      0

| $K_0$ |
|---|
| $K_1$ |
| $K_2$ |
| $K_3$ |
| $K_4$ |
| $K_5$ |
| $K_6$ |
| $K_7$ |

FIG. 10A

FIG. 10B

FIG. 10C

# REGISTER ARCHITECTURE 1100

**GENERAL-PURPOSE REGISTERS 1125**
(16 X 64 BITS)

**VECTOR REGISTERS 1110**
512 BITS

$zmm_0$ | $ymm_0$ | $xmm_0$

$ymm_{15}$ | $xmm_{15}$

128 BITS

256 BITS

$zmm_{31}$

**SCALAR FP STACK REGISTER FILE (X87FP) 1145**
80 BITS

0

ALIASED

7

64 BITS
**MMX PACKED INTEGER FLAT REGISTER FILE 1150**

**WRITE MASK REGISTERS 1115**
(64 BITS)

$k_0$

$k_7$

**FIG. 11**

EP 3 394 725 B1

**FIG. 12A**

PIPELINE 1200

| FETCH 1202 | LENGTH DECODING 1204 | DECODE 1206 | ALLOC. 1208 | RENAMING 1210 | SCHEDULE 1212 | REGISTER/ MEMORY READ 1214 | EXECUTE STAGE 1216 | WRITE BACK/ MEMORY WRITE 1218 | EXCEPTION HANDLING 1222 | COMMIT 1224 |

CORE 1290

FRONT END UNIT 1230

BRANCH PREDICTION UNIT 1232

INSTRUCTION CACHE UNIT 1234

INSTRUCTION TLB UNIT 1236

INSTRUCTION FETCH 1238

DECODE UNIT 1240

EXECUTION ENGINE UNIT 1250

RENAME / ALLOCATOR UNIT 1252

RETIREMENT UNIT 1254

SCHEDULER UNIT(S) 1256

PHYSICAL REGISTER FILES UNIT(S) 1258

EXECUTION UNIT(S) 1262

MEMORY ACCESS UNIT(S) 1264

EXECUTION CLUSTER(S) 1260

MEMORY UNIT 1270

DATA TLB UNIT 1272

DATA CACHE UNIT 1274

L2 CACHE UNIT 1276

**FIG. 12B**

EP 3 394 725 B1

## FIG. 13A

INSTRUCTION DECODE
1300

SCALAR UNIT
1308

VECTOR
UNIT
1310

SCALAR
REGISTERS
1312

VECTOR
REGISTERS
1314

L1 CACHE
1306

LOCAL SUBSET OF THE L2 CACHE
1304

RING NETWORK
1302

**FIG. 13A**

## FIG. 13B

WRITE MASK REGISTERS
1326

16-WIDE VECTOR ALU
1328

REPLICATE
1324

SWIZZLE
1320

VECTOR
REGISTERS
1314

NUMERIC
CONVERT
1322A

NUMERIC
CONVERT
1322B

L1 DATA CACHE
1306A

**FIG. 13B**

EP 3 394 725 B1

PROCESSOR 1400

SPECIAL PURPOSE LOGIC 1408

CORE 1402A

CACHE UNIT(S) 1404A

· · ·

CORE 1402N

CACHE UNIT(S) 1404N

SYSTEM AGENT UNIT 1410

SHARED CACHE UNIT(S) 1406

RING 1412

INTEGRATED MEMORY CONTROLLER UNIT(S) 1414

BUS CONTROLLER UNIT(S) 1416

**FIG. 14**

FIG. 15

FIG. 16

FIG. 17

FIG. 18

FIG. 19

PROCESSOR WITHOUT AN X86 INSTRUCTION SET CORE 1914

PROCESSOR WITH AT LEAST ONE X86 INSTRUCTION SET CORE 1916

HARDWARE

SOFTWARE

ALTERNATIVE INSTRUCTION SET BINARY CODE 1910

INSTRUCTION CONVERTER 1912

X86 BINARY CODE 1906

ALTERNATIVE INSTRUCTION SET COMPILER 1908

X86 COMPILER 1904

HIGH LEVEL LANGUAGE 1902

EP 3 394 725 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020027552 A1
- US 20040143728 A1
- US 20030167460 A1

### Non-patent literature cited in the description

- *Intel® 64 and IA-32 Architectures Software Developers Manual,* October 2011
- *Intel® Advanced Vector Extensions Programming Reference,* June 2011